# EUROPEAN PATENT APPLICATION

(11) **EP 4 440 168 A1**
(43) Date of publication of application: **02.10.2024**
(21) Application number: 22897718.7
(22) Date of filing: 18.11.2022
(51) Int. Cl.: H04W 12/06

(54) **DATA TRANSMISSION METHOD AND APPARATUS, CONFIGURATION METHOD AND APPARATUS, AND TERMINAL AND NETWORK-SIDE DEVICE**

(30) Priority: 24.11.2021 CN 202111406554
(71) Applicant: Vivo Mobile Communication Co., Ltd., Dongguan, Guangdong 523863 (CN)
(72) Inventor: LIU, Jiamin, Dongguan, Guangdong 523863 (CN)
(74) Representative: Conti, Marco
(86) International application number: PCT/CN2022/132859
(87) International publication number: WO 2023/093635

(57) **Abstract**

This application discloses a data transmission method, a configuration method, an apparatus, a terminal, and a network-side device, belonging to the technical field of communications. The data transmission method of an embodiment of this application includes: receiving, a primary UE (P-UE), configuration information from a network-side device, where the P-UE is capable of performing joint data transmission with a secondary UE (S-UE); and performing, by the P-UE, data splitting or data duplication transmission according to the configuration information.

## Description

### CROSS-REFERENCE TO RELATED APPLICATIONS

This application claims priority to Chinese Patent Application No. 202111406554.8 filed on November 24, 2021, which is incorporated herein by reference in its entirety.

### TECHNICAL FIELD

This application belongs to the technical field of communications, and particularly relates to a data transmission method, a configuration method, an apparatus, a terminal, and a network-side device.

### BACKGROUND

In the existing technology, the processes of data splitting and data duplication both aim to be compatible with a dual connectivity (Dual Connectivity, DC) scenario, that is, one terminal is simultaneously connected to two network-side devices such as base stations, and is independently scheduled by the two base stations to complete uplink transmission. In a terminal aggregation (aggregation) architecture, a plurality of terminals are simultaneously connected to the same base station. Data is scheduled by the same base station. In this case, it has not yet been determined how to perform data splitting and data duplication transmission.

### SUMMARY

Embodiments of this application provide a data transmission method, a configuration method, an apparatus, a terminal, and a network-side device, so that the problem about how to perform data splitting and data duplication transmission in a terminal aggregation architecture can be solved.

According to a first aspect, a data transmission method is provided, and is applied to a primary UE (P-UE), the method including:
receiving, by the P-UE, configuration information from a network-side device, where the P-UE is capable of performing joint data transmission with a secondary UE (S-UE); and
performing, by the P-UE, data splitting or data duplication transmission according to the configuration information.

According to a second aspect, a data transmission method is provided, and is applied to an S-UE, the method including:
receiving, by the S-UE, configuration information from a network-side device, where the S-UE is capable of performing joint data transmission with a P-UE; and
performing, by the S-UE, data transmission according to the configuration information.

According to a third aspect, a configuration method is provided, and is applied to a network-side device, the method including:
transmitting, by a network-side device, configuration information to a P-UE and/or an S-UE,
where the P-UE is capable of performing joint data transmission with the S-UE; the configuration information is used to indicate at least one of the following:
   configuring a duplication function for a radio bearer of the P-UE, or, not configuring a duplication function for a radio bearer of the P-UE;
   a protocol layer with the duplication function;
   a primary RLC entity of the radio bearer of the P-UE;
   conditions for data splitting;
   a threshold for data splitting;
   a threshold for a volume of buffered data of the P-UE;
   a split (split) bearer configured by the network-side device for the P-UE;
   a packet data convergence protocol (Packet Data Convergence Protocol, PDCP) entity configured by the network-side device for the split bearer being located at the P-UE;
   the PDCP entity configured by the network-side device for the split bearer being located at the P-UE, the PDCP entity being associated with at least two RLC entities, and each of the RLC entities being located at a different P-UE or S-UE;
   a type of the split bearer configured by the network-side device;
   a standardized interface being used between the P-UE and the S-UE;
   a non-standardized interface being used between the P-UE and the S-UE;
   a non-ideal interface being between the P-UE and the S-UE;
   an ideal interface being between the P-UE and the S-UE;
   a data splitting manner used by the P-UE; and
   a data duplication manner used by the P-UE.

According to a fourth aspect, a data transmission apparatus is provided, and is applied to a P-UE, including:
a first receiving module, configured to receive configuration information from a network-side device, where the P-UE is capable of performing joint data transmission with an S-UE; and
an executing module, configured to perform data splitting or data duplication transmission according to the configuration information.

According to a fifth aspect, a data transmission apparatus is provided, and is applied to an S-UE, including:
a third receiving module, configured to receive configuration information from a network-side device, where the S-UE is capable of performing joint data transmission with a P-UE; and
a transmission module, configured to perform data transmission according to the configuration information.

According to a sixth aspect, a configuration apparatus is provided, and is applied to a network-side device, including:
a third transmitting module, configured to transmit configuration information to a P-UE and/or an S-UE,
where the P-UE is capable of performing joint data transmission with the S-UE; the configuration information is used to indicate at least one of the following:
   configuring a duplication function for a radio bearer of the P-UE, or, not configuring a duplication function for a radio bearer of the P-UE;
   a protocol layer with the duplication function;
   a primary RLC entity of the radio bearer of the P-UE;
   conditions for data splitting;
   a threshold for data splitting;
   a threshold for a volume of buffered data of the P-UE;
   a split bearer configured by the network-side device for the P-UE;
   a split bearer configured by the network-side device for a PDCP entity being located at the P-UE;
   the split bearer configured by the network-side device for the PDCP entity being located at the P-UE, the PDCP entity being associated with at least two RLC entities, and each of the RLC entities being located at a different P-UE or S-UE;
   a type of the split bearer configured by the network-side device;
   a standardized interface being used between the P-UE and the S-UE;
   a non-standardized interface being used between the P-UE and the S-UE;
   a non-ideal interface being between the P-UE and the S-UE;
   an ideal interface being between the P-UE and the S-UE;
   a data splitting manner used by the P-UE; and
   a data duplication manner used by the P-UE.

According to a seventh aspect, a terminal is provided, the terminal including a processor and a memory, the memory storing programs or instructions capable of running on the processor, and the program or instruction, when executed by the processor, implementing steps of the method according to the first aspect or implementing steps of the method according to the second aspect.

According to an eighth aspect, a terminal is provided, including a processor and a communication interface, where in a case that the terminal is a P-UE, the communication interface is configured to receive configuration information from a network-side device, and perform data splitting or data duplication transmission according to the configuration information; or, in a case that the terminal is an S-UE, the communication interface is configured to receive configuration information from a network-side device, and perform data transmission according to the configuration information; where the P-UE is capable of performing joint data transmission with the S-UE.

According to a ninth aspect, a network-side device is provided, the network-side device including a processor and a memory, the memory storing programs or instructions capable of running on the processor, and the program or instruction, when executed by the processor, implementing steps of the method according to the third aspect.

According to a tenth aspect, a network-side device is provided, including a processor and a communication interface, where the communication interface is configured to transmit configuration information to a P-UE and/or an S-UE; and the P-UE is capable of performing joint data transmission with the S-UE.

According to an eleventh aspect, a communications system is provided, including: a P-UE, an S-UE and a network-side device, where the P-UE may be configured to execute steps of the data processing method according to the first aspect, the S-UE may be configured to execute steps of the data processing method according to the second aspect, and the network-side device may be configured to execute steps of the configuration method according to the third aspect.

According to a twelfth aspect, a readable storage medium is provided, the readable storage medium storing programs or instructions, the program or instruction, when executed by a processor, implementing steps of the method according to the first aspect, or implementing steps of the method according to the second aspect, or implementing steps of the method according to the third aspect.

According to a thirteenth aspect, a chip is provided, the chip including a processor and a communication interface, where the communication interface is coupled to the processor, and the processor is configured to run programs or instructions to implement steps of the method according to the first aspect, or implement steps of the method according to the second aspect, or implement steps of the method according to the third aspect.

According to a fourteenth aspect, a computer program/program product is provided, where the computer program/program product is stored in a storage medium, and the computer program/program product is executed by at least one processor to implement steps of the method according to the first aspect, or implement steps of the method according to the second aspect, or implement steps of the method according to the third aspect.

According to a fifteenth aspect, a communication device is provided, being configured to execute steps of the method according to the first aspect, or being configured to execute steps of the method according to the second aspect, or being configured to execute steps of the method according to the third aspect.

In the embodiments of this application, the P-UE may receive the configuration information from the network-side device, and perform data splitting or data duplication transmission according to the configuration information, where the P-UE is capable of performing joint data transmission with the S-UE. As a result, it is possible to define a method of data splitting or data duplication transmission under a terminal aggregation architecture, so that the data of a single user can fully and efficiently use links of a plurality of terminals for transmission, thus improving the service experience of a user and guaranteeing the quality of service (Quality of Service, QoS) of services, which improves the experience of the user and guarantees the system efficiency at the same time.

### BRIEF DESCRIPTION OF THE DRAWINGS

FIG. 1 is a block diagram of a wireless communication system to which embodiments of this application are applicable;
FIG. 2A, FIG. 2B and FIG. 2C are schematic diagrams of architectures of protocol stacks to which embodiments of this application are applicable;
FIG. 3 is a flowchart of a data transmission method provided by an embodiment of this application;
FIG. 4 is a flowchart of another data transmission method provided by an embodiment of this application;
FIG. 5 is a flowchart of a configuration method provided by an embodiment of this application;
FIG. 6 is a schematic structural diagram of a data transmission apparatus provided by an embodiment of this application;
FIG. 7 is a schematic structural diagram of another data transmission apparatus provided by an embodiment of this application;
FIG. 8 is a schematic structural diagram of a configuration apparatus provided by an embodiment of this application;
FIG. 9 is a schematic structural diagram of a communication device provided by an embodiment of this application;
FIG. 10 is a schematic structural diagram of a terminal provided by an embodiment of this application; and
FIG. 11 is a schematic structural diagram of a network-side device provided by an embodiment of this application.

### DETAILED DESCRIPTION

The technical solutions in embodiments of this application are clearly described in the following with reference to the accompanying drawings in the embodiments of this application. Apparently, the described embodiments are merely some rather than all of the embodiments of this application. All other embodiments obtained by those of ordinary skill in the art based on the embodiments of this application fall within the protection scope of this application.

In the specification and claims of this application, and terms "first", "second" and the like are used to distinguish similar objects, and are not used to describe a specific sequence or precedence order. It is to be understood that terms used in this way are exchangeable in a proper case, so that the embodiments of this application can be implemented in an order different from the order shown or described herein, and the objects distinguished by "first" and "second" are usually of one type, and there is no limit to the number of objects, for example, the first object may be one or more than one. In addition, "and/or" used in the specification and the claims represents at least one of the connected objects, and the character "/" generally indicates an "or" relationship between the objects associated in the context.

It is to be noted that the technologies described in the embodiments of this application are not limited to a long term evolution (Long Term Evolution, LTE)/LTE-advanced (LTE-Advanced, LTE-A) system, and may further be applied to other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems. The terms "system" and "network" are often used interchangeably in the embodiments of this application, and the technologies described may be used for both the systems and radio technologies mentioned above, as well as for other systems and radio technologies. The following description describes a new radio (NR) system for exemplary purposes and uses the term NR for much of the following description, however, these technologies may also be used in applications other than applications of the NR system, such as 6th generation (6th Generation, 6G) communication systems.

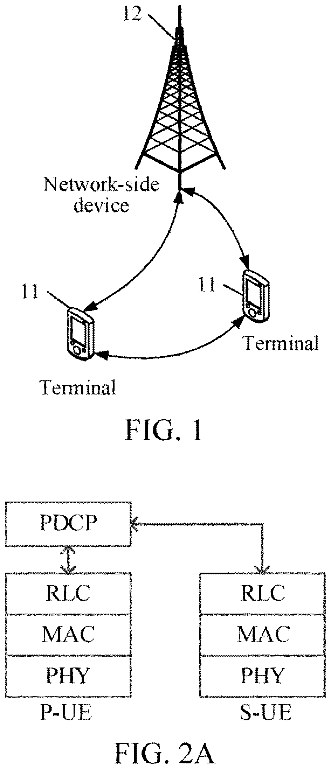

FIG. 1 is a block diagram of a wireless communication system to which embodiments of this application are applicable. The wireless communication system includes a terminal 11 and a network-side device 12. The terminal 11 may be a mobile phone, a tablet personal computer (Tablet Personal Computer), a laptop computer (Laptop Computer) or a notebook computer, a personal digital assistant (Personal Digital Assistant, PDA), a handheld computer, a netbook, an ultra-mobile personal computer (ultra-mobile personal computer, UMPC), a mobile Internet device (Mobile Internet Device, MID), an augmented reality (Augmented Reality, AR)/virtual reality (virtual reality, VR) device, a robot, a wearable device (Wearable Device), or a vehicle user equipment (Vehicle User Equipment, VUE), a pedestrian user equipment (Pedestrian User Equipment, PUE), a smart home device (a home device with a wireless communication function, such as a refrigerator, a television, a washing machine, or furniture), a game console, a personal computer (Personal Computer, PC), an automatic teller machine or a self-service machine or other terminal side devices. The wearable device includes: smart watches, smart bands, smart headphones, smart glasses, smart jewelry (smart bracelets, smart brace laces, smart rings, smart necklaces, smart leglets, smart anklets, etc.), smart wristbands, smart clothing, and the like. It is to be noted that the specific type of the terminal 11 is not limited in the embodiments of this application. The network-side device 12 may include an access network device or a core network device, where the access network device 12 may also be referred to as a radio access network device, a radio access network (Radio Access Network, RAN), a radio access network function, or a radio access network unit. The access network device 12 may include a base station, a wireless local area network (Wireless Local Area Network, WLAN) access point, a wireless fidelity (Wireless Fidelity, WiFi) node or the like. The base station may be referred to as a node B, an evolved node B (eNB), an access point, a base transceiver station (Base Transceiver Station, BTS), a radio base station, a radio transceiver, a basic service set (Basic Service Set, BSS), an extended service set (Extended Service Set, ESS), a household node B, a household evolved node B, a transmitting receiving point (Transmitting Receiving Point, TRP) or some other suitable terms in the field as long as the same technical effect is achieved, and the base station is not limited to a specific technical word. It is to be noted that only a base station in the NR system is described as an example in the embodiments of this application, but the specific type of the base station is not limited.

In order to facilitate understanding the embodiments of this application, firstly, the following content is described.

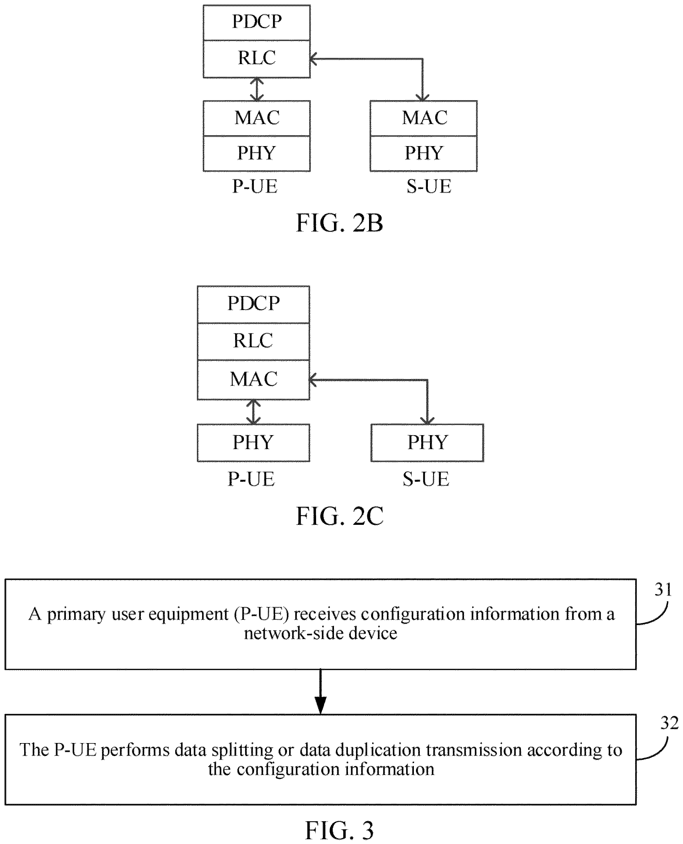

In the embodiments of this application, a multi-terminal architecture/terminal aggregation architecture for an aggregation/backup/handover bearer involved mainly refers to user plane (User Plane, UP) protocol stack architectures as shown in FIG. 2A to FIG. 2C. The UP protocol stack architecture as shown in FIG. 2A can also be referred to as a packet data convergence protocol (Packet Data Convergence Protocol, PDCP) anchor (anchor) architecture, where a PDCP entity of a primary UE (P-UE) is associated with radio link control (Radio Link Control, RLC) entities of the P-UE and a secondary UE (S-UE), respectively. The UP protocol stack architecture as shown in FIG. 2B can also be referred to as an RLC anchor architecture, where an RLC entity of a P-UE is associated with medium access control (Medium Access Control, MAC) entities of the P-UE and an S-UE, respectively. The UP protocol stack architecture as shown in FIG. 2C can also be referred to as an MAC anchor architecture, where an MAC entity of a P-UE is associated with physical layer (Physical Layer, PHY) entities of the P-UE and an S-UE, respectively. It is to be understood that in the terminal aggregation architecture, one P-UE exists and the P-UE is associated with at least one S-UE, i.e., one or more S-UE may exist.

In the embodiments of this application, the bearer involved mainly includes: a split (split) bearer of an anchor at the P-UE, i.e., one data bearer is generated by the P-UE and is capable of performing transmission in a manner of a protocol stack and links of the P-UE and/or the S-UE. The bearer may also be referred to as an aggregation bearer, which is a new type of bearer involved in this embodiment.

Optionally, the split bearer in the embodiment of this application may also be referred to as a backup bearer, a handover bearer, an aggregation bearer, and the like, with no limitation thereon.

Optionally, data splitting (split) in the embodiments of this application may also be referred to as data splitting, with no limitation thereon.

Since the multi-terminal bearer aggregation architecture involves in depth cooperation between a plurality of terminals, the characteristics of interfaces between the terminals are relatively important determinants for a data scheduling and split mechanism.

Optionally, in the embodiments of this application, the interfaces between the terminals may be non-ideal interfaces or ideal interfaces. The non-ideal interface may be applicable to a scenario where the requirements for interface characteristics are not high, and may be applicable to all interface types, e.g., a wired interface/wireless interface, a standardized interface/non-standardized interface, a PC5 interface/Bluetooth/WiFi, and the like may be between user equipment (User Equipment, UE). The non-ideal interface is characterized in that: real-time information and data interaction cannot be achieved between the terminals, and an interaction delay is generally at the order of milliseconds (millisecond, ms) or sub-ms, such as 10^-2ms to tens of ms. In this case, data generated by the P-UE needs to be sent to the S-UE in advance, and the S-UE reports the buffer status report (Buffer Status Report, BSR) according to the data volume of the aggregation bearer buffered by itself, requests scheduling from a base station, and according to the size of a scheduling resource, organizes the data that is already in its own buffer to perform packing and send them. The ideal interface is characterized in that: a transmission delay between the terminals is low enough, e.g., less than or much less than the order of ms, so that states and data between the terminals can be interacted with each other quickly, making transmission and scheduling more efficient.

Optionally, if the interface between the terminals is a non-ideal interface, the architecture which the interface is applicable to is the PDCP anchor architecture as shown in FIG. 2A. And if the interface between the terminals is an ideal interface, any one of the UP protocol stack architectures in FIG. 2A to FIG. 2C can be selected.

PDCP duplication (duplication): a PDCP duplication transmission mechanism is introduced to improve transmission reliability while shortening the transmission delay. Whether PDCP duplication transmission is supported or not can be configured on the basis of each radio bearer. Once duplication transmission is activated, all the PDCP data protocol data units (Protocol Data Unit, PDU) can be duplicated by N parts on a PDCP entity of the radio bearer to be sent to different RLC entities for transmission, where N is greater than or equal to 2, and is a configurable parameter. PDCP duplication transmission may be activated or deactivated.

A data transmission method, a configuration method, an apparatus, a terminal, and a network-side device provided by the embodiments of this application are described in detail below in a manner of some embodiment and the application scenarios thereof in conjunction with the attached drawings.

Please refer to FIG. 3, FIG. 3 is a flowchart of a data transmission method provided by an embodiment of this application. The method is executed by a P-UE. As shown in FIG. 3, the method includes the following steps:
Step 31: The P-UE receives configuration information from a network-side device.
Step 32: The P-UE performs data splitting or data duplication transmission according to the configuration information.

The P-UE is capable of performing joint data transmission with an S-UE. In other words, for data of a certain service or data of the P-UE, the data can be transmitted jointly on the P-UE and the S-UE, i.e., data transmission is performed jointly between the P-UE and the S-UE. For data splitting (split) or data duplication (duplication) transmission, data splitting or data duplication transmission can be performed dynamically on the basis of whether a duplication function is activated or whether uplink grant resources of the P-UE and the S-UE are in the same size. For example, if the duplication function is activated or the uplink grant resources of the P-UE and the S-UE are in the same size, data duplication transmission can be performed, whereas if the duplication function is de-activated or the uplink grant resources of the P-UE and the S-UE are not in the same size, data splitting can be performed.

In the data transmission method of the embodiment of this application, the P-UE may receive the configuration information from the network-side device, and perform data splitting or data duplication transmission according to the configuration information, the P-UE is capable of performing joint data transmission with the S-UE. As a result, it is possible to define a method of data splitting or data duplication transmission under a terminal aggregation architecture, so that the data of a single user can fully and efficiently use links of a plurality of terminals for transmission, thus improving the service experience of a user and guaranteeing the quality of service (Quality of Service, QoS) of services, which improves the experience of the user and guarantees the system efficiency at the same time.

Since the network-side device always serves as a controller and the terminal always serves as a controlled party during interaction between the terminal and the network-side device, it is necessary for the network-side device to send the configuration information to the terminal to achieve unified understanding and a unified behavior between the network-side device and the terminal in different situations. The P-UE and/or the S-UE can determine operation methods of data splitting (split) and duplication (duplication) according to configuration of the network-side device.

Optionally, the above configuration information may be used to indicate at least one of the following:
configuring a duplication function for a radio bearer of the P-UE, or, not configuring a duplication function for a radio bearer of the P-UE; for example, whether to configure a duplication function/mechanism for a data radio bearer (Data Radio Bearer, DRB) can be indicated;
a protocol layer with the duplication function; for example, the duplication function may reside in a PDCP layer, an MAC layer, or the like;
a primary RLC entity of the radio bearer of the P-UE; for example, an RLC entity of the P-UE may be defaulted to be a primary RLC entity, or may explicitly indicate a primary RLC entity;
conditions for data splitting (split);
a threshold for data splitting; for example, the threshold may be a link quality threshold of a terminal where the primary RLC entity is located, or a link quality threshold of a terminal where a secondary RLC entity is located, or the like; the link is optionally a Uu link, which is not limited;
a threshold for a volume of buffered data of the P-UE; for example, if the buffered data volume does not exceed a first threshold, only the P-UE participates in transmission; if the buffered data volume exceeds the first threshold, one S-UE may be activated to participate in transmission; if the buffered data volume exceeds a second threshold, another S-UE may be activated to participate in transmission, where the second threshold is greater than the first threshold; and so on;
a split configured by the network-side device bearer for the P-UE;
a split bearer configured by the network-side device for a PDCP entity being located at the P-UE;
the split bearer configured by the network-side device for the PDCP entity being located at the P-UE, the PDCP entity being associated with at least two RLC entities, and each of RLC entities being located at a different P-UE or S-UE;
a type of the split bearer configured by the network-side device; for example, the type is a PDCP anchor, an RLC anchor or an MAC anchor, etc;
a standardized interface being used between the P-UE and the S-UE; for example, the interface is a PC5 interface or the like;
a non-standardized interface being used between the P-UE and the S-UE;
a non-ideal interface being between the P-UE and the S-UE; for example, the non-ideal interface is a wireless interface, or an interface with a transmission delay greater than or equal to a certain threshold, etc.
an ideal interface being between the P-UE and the S-UE; for example, the ideal interface is in wired connection, or is an interface with a transmission delay less than or equal to a certain threshold, etc;
a data splitting manner used by the P-UE; and
a data duplication manner used by the P-UE.

In some embodiments, the network-side device may explicitly configure a data splitting manner and/or a data duplication manner adopted by the P-UE.

In this way, according to the above configuration information, the network-side device and the P-UE may be operated in accordance with a unified data splitting or duplication manner. That is, after configuration of the network-side device is completed, the network-side device and the P-UE have the same perception and understanding on the data splitting or duplication manner, and subsequent operation is performed in accordance with rules.

In some embodiments, before the network-side device such as a base station sends the configuration information to the UE, a certain UE reporting process may be introduced, where report information is, for example, information about interfaces between the UEs and/or an operation processing method that the UE tends to use, etc., so that the base station can determine a suitable data processing method. For example, reporting may be performed only by the P-UE.

In some embodiments, in a case that the interface between the terminals is an ideal interface, i.e., an ideal backhaul is between the terminals, the method of data splitting may be determined on the basis of the size of a scheduling resource received by each terminal, i.e., the larger the received scheduling resource, the larger the volume of borne data. Or, in a case that the interface between the terminals is a non-ideal interface, i.e., a non-ideal backhaul is between the terminals, data splitting needs to be initiated on the basis of certain conditions, such as information about the link quality of each terminal and/or information about data to be transmitted in a buffer, etc., and split data needs to be sent in advance to the corresponding SUE to wait for transmission.

In some embodiments, in a case that the interface between the terminals is an ideal interface, i.e., an ideal backhaul is between the terminals, the method of data duplication may be dynamically determined, e.g., the method of data duplication is determined on the basis of the size of the scheduling resource received by each terminal. Or, in a case that the interface between the terminals is a non-ideal interface, i.e., a non-ideal backhaul is between the terminals, the data duplication function needs to be explicitly activated/de-activated or activated on the basis of certain conditions, and once the data duplication function is activated, duplicated data needs to be sent in advance to the corresponding S-UE to wait for transmission.

Since the terminal aggregation architecture involves in depth cooperation between a plurality of terminals, the characteristics of the interface between the terminals are relatively important determinants for data splitting and duplication transmission under the terminal aggregation architecture. In conjunction with the type of the interface between the terminals, data splitting/duplication of the P-UE is described below in different cases.

### Case I:

In Case I, the interface between the terminals is an ideal interface, i.e., an ideal backhaul is between the terminals.

It is to be noted that the interface between the terminals is an ideal interface, which is one of the characteristics playing a decisive role in the data scheduling and split mechanism, and therefore the interface type needs to be interacted during a radio resource control (Radio Resource Control, RRC) signaling interaction process between the terminal and a network, for example, in a manner of an uplink UE aggregation request (UE Aggregation Request), or terminal auxiliary information reporting, or other uplink RRC processes, the interface type is reported to the network-side device, such as a base station, so that the base station is capable of performing configuration for scheduling and split. The base station, upon being informed of the case that the interface between the terminals is an ideal interface, may configure separate buffer reporting and/or data splitting parameters for the P-UE, e.g., indicating, via a piece of bit (bit) indication information, that the P-UE may execute a data splitting process of the ideal interface. Compared with a non-ideal backhaul, during ideal backhaul transmission, both data splitting and data duplication transmission can be more flexible.

Optionally, before performing data splitting or data duplication transmission, the P-UE may buffer data to be transmitted in its own buffer. That is to say, in the case of an ideal interface, the data to be transmitted of the P-UE does not have to be sent to the designated SUE for buffering in advance, but can be directly buffered in the buffer of the P-UE.

Optionally, before performing data splitting or data duplication transmission, the P-UE may perform a reporting process of buffer status report (Buffer Status Report, BSR) according to the buffered data volume of its own. That is, in the case of an ideal interface, the BSR reporting process can be performed by the P-UE according to the buffered data volume of its own to inform the network-side device of the data volume to be sent.

Optionally, in this case, for performing data splitting or data duplication transmission, the P-UE may perform at least one of the following.
(1) The P-UE generates a first data packet in a manner of a data splitting or duplication according to the size of an uplink grant resource allocated for it by the network-side device, and sends the first data packet.
(2) The P-UE receives a data request sent by the S-UE according to the size of its uplink grant resource, generates a second data packet according to the size of the uplink grant resource and in a manner of a data splitting or duplication, and sends the second data packet to the S-UE, and the S-UE sends the second packet. In other words, if the S-UE receives the scheduled uplink grant resource, it can inform the size of the resource to the P-UE, the P-UE organizes the data packet according to the size of the resource and sends the data packet to the S-UE, and the S-UE sends the received data packet.
(3) The P-UE receives scheduling information of the S-UE, determines the size of an uplink grant resource of the S-UE according to the scheduling information, generates a third data packet according to the size of the uplink grant resource and in a manner of a data splitting or duplication, and sends the third data packet to the S-UE, and the S-UE sends the third data packet.
(4) The P-UE sends a fourth data packet to the S-UE according to an UP protocol stack architecture thereof in a manner of a data splitting or duplication. Depending on different UP protocol stack architectures, the corresponding data packets may be in different forms, such as a PDCP protocol data unit (Protocol Data Unit, PDU), an RLC PDU, or an MAC PDU, or the like.

In some embodiments, the S-UE may have its own hybrid automatic repeat request (Hybrid Automatic Repeat Request, HARQ) retransmission buffer, data needing HARQ processing is stored in the buffer, and if HARQ retransmission is needed, data is acquired from the buffer and retransmitted, and when the maximum number of retransmission is reached or the HARQ process is occupied by new data, buffered data of the HARQ process is cleared.

It is to be noted that in a case that the interface between the terminals is an ideal interface, the network-side device such as a base station can determine how to allocate an uplink resource for a plurality of terminals according to its own scheduling algorithm on the basis of buffer report of the P-UE in conjunction with the link condition of each terminal. For example, when there are 10000 bytes of data to be transmitted, the base station can choose to transmit the 10000 bytes of data in a manner of the uplink resource of the P-UE at different moments (e.g., scheduling is required to be performed 4 times), or the P-UE and the S-UE may be scheduled at the same time (e.g., each of the P-UE and the S-UE needs to be scheduled 2 times). The previous scheduling method has a lower demand for the resource, and can be used in a case that a system load is heavy or the quality of service (Quality of Service, QoS) of services, such as a delay requirement, is not high. The latter scheduling method has a higher demand for the resource and can be used in a case that the system load is lighter or the QoS of services, such as a delay requirement, is high. For the terminal, the purpose of terminal aggregation is to use transmission channel conditions of the plurality of terminals simultaneously to acquire a great throughput or better QoS, so the latter scheduling method is preferred for the terminal. The network can also try to perform joint scheduling of the plurality of terminals according to the demand of the terminal, so as to achieve a peak value of service experience.

In this case, the network-side device can make full use of the channel conditions of the plurality of terminals to flexibly schedule the uplink resource. Due to the existence of an ideal interface between the terminals, flexible multi-terminal scheduling can also be well supported and packing and sending are quickly performed according to resource allocation, and thus it is a case with higher resource scheduling and transmission efficiency.

### Case II:

In case II, the interface between the terminals is a non-ideal interface, i.e., a non-ideal backhaul is between the terminals.

For the terminal aggregation architecture, when the interface between the terminals is a non-ideal interface, another path transmission can be allowed when a volume of buffered data of the P-UE reaches a certain threshold. Further, the P-UE may also perform data splitting (split) in conjunction with the link quality of the P-UE and the S-UE, feedback information from the S-UE, and the like.

Optionally, the process of performing data splitting by the P-UE may include: in a case that there are M-1 data volume thresholds and M RLC entity sets, the M-1 data volume thresholds include a first threshold, a second threshold ... an (M-1)^{th} threshold, the M RLC entity sets include a first RLC entity set, a second RLC entity set ... an M* RLC entity set, and M is greater than 1, the P-UE performs any of the following.

In a case that a volume of buffered data of the P-UE is lower than the first threshold, data transmission is performed at the first RLC entity set.

In a case that a volume of buffered data of the P-UE is higher than or equal to the first threshold and lower than the second threshold, data transmission is performed at the first RLC entity set and the second RLC entity set.

In a case that a volume of buffered data of the P-UE is higher than or equal to the second threshold and lower than the third threshold, data transmission is performed at the first RLC entity set, the second RLC entity set and the third RLC entity set.

And so on, when a volume of buffered data of the P-UE is higher than the (M-1)^{th} threshold, data transmission is performed at the M RLC entity sets.

It is to be noted that the above M-1 data volume thresholds may be predefined or configured on a network side, without limitation thereon. The above M RLC entity sets may be predefined or configured on a network side, without limitation thereon. Preferably, in the M RLC entity sets, the first RLC entity set includes one RLC entity that is an RLC entity of the P-UE or a designated primary RLC entity; A second RLC entity set includes an RLC entity that is an RLC entity designated by the configuration or an RLC entity of any S-UE of all the S-UEs associated with the P-UE. the third RLC entity set includes one RLC entity that is an RLC entity designated by the configuration or an RLC entity of any S-UE of all the S-UEs associated with the P-UE; and so on.

For example, if M is equal to 2, i.e., there is only one data volume threshold.

When a volume of buffered data of the P-UE is lower than the data volume threshold, the data of the P-UE is transmitted only at the RLC entity/transmission path of the P-UE, or, the data of the P-UE is transmitted only at an RLC entity (being a designated primary RLC entity herein)/transmission path of one designated terminal.

When a volume of buffered data of the P-UE is higher than or equal to the data volume threshold, the data of the P-UE may be transmitted at RLC entities/transmission paths of two terminals. One terminal of the two terminals is the P-UE or the terminal designated as the primary RLC entity/transmission path, and the other terminal is a terminal designated by the configuration, or is any one S-UE except the P-UE. How the P-UE selects the S-UE can be realized on the basis of the terminal, for example, the P-UE can select the S-UE with a less backhaul delay as much as possible according to attributes of the backhaul, or the P-UE can select the S-UE according to the link quality, and the like.

Or, when a volume of buffered data of the P-UE is higher than or equal to the data volume threshold, the data of the P-UE may be transmitted at RLC entities/transmission paths of all the terminals, the number of all the terminals is greater than 2, and all the terminals include the P-UE and all S-UEs associated with the P-UE.

As another example, if M is greater than 2, i.e., there are a plurality of data volume thresholds, assuming that the magnitudes of the thresholds rise in sequence from threshold 1 to threshold M-1.

When a volume of buffered data of the P-UE is lower than threshold 1, the data of the P-UE is transmitted only at the RLC entity/transmission path of the P-UE, or, the data of the P-UE is transmitted only at the RLC entity (being a designated primary RLC entity)/transmission path of one designated terminal.

When a volume of buffered data of the P-UE is higher than or equal to threshold 1 and lower than threshold 2, the data of the P-UE may be transmitted at the RLC entities/transmission path of two terminals. One terminal of the two terminals is the P-UE or the terminal designated as the primary RLC entity/transmission path, and the other terminal is a terminal designated by the configuration, or is any one S-UE except the P-UE. How the P-UE selects the S-UE can be realized on the basis of the terminal, for example, the P-UE can select the S-UE with a less backhaul delay as much as possible according to attributes of the backhaul, or the P-UE can select the S-UE according to the link quality, and the like.

When a volume of buffered data of the P-UE is higher than or equal to threshold 2 and lower than threshold 3, the data of the P-UE may be transmitted at the RLC entities/transmission paths of three terminals. One terminal of the three terminals is the P-UE or the terminal designated as the primary RLC entity/transmission path, and the other two terminals are terminals designated by the configuration, or are any two S-UEs except the P-UE. How the P-UE selects the S-UE can be realized on the basis of the terminal, for example, the P-UE can select the S-UE with a less backhaul delay as much as possible according to attributes of the backhaul, or the P-UE can select the S-UE according to the link quality, and the like.

And so forth, when a volume of buffered data of the P-UE is higher than threshold M-1, the data of the P-UE may be transmitted at RLC entities/transmission paths of all the terminals, where the number of all the terminals is greater than 2, and all the terminals include the P-UE and all the S-UEs associated with the P-UE.

In addition, the above data splitting manner can also be combined and changed as appropriate. For example, when there are two data volume thresholds, n terminals, and n is greater than or equal to 4, a first threshold can be used to control single-path transmission; when the data volume threshold is higher than or equal to the first threshold, dual-path transmission is performed, a second threshold is used to control n-path transmission, and when the data volume threshold is higher than or equal to the second threshold, n-path transmission of all terminals is performed. That is to say:
when a volume of buffered data of the P-UE is lower than the first threshold, the data of the P-UE is transmitted only at the RLC entity/transmission path of the P-UE, or, the data of the P-UE is transmitted only at an RLC entity (being a designated primary RLC entity)/transmission path of one designated terminal;
when a volume of buffered data of the P-UE is higher than or equal to the first threshold and lower than the second threshold, the data of the P-UE is transmitted at RLC entities/transmission paths of two terminals. One terminal of the two terminals is the P-UE or the terminal designated as the primary RLC entity/transmission path, and the other terminal is a terminal designated by the configuration, or is any one S-UE except the P-UE. How the P-UE selects the S-UE can be realized on the basis of the terminal, for example, the P-UE can select the S-UE with a less backhaul delay as much as possible according to attributes of the backhaul, or the P-UE can select the S-UE according to the link quality, and the like.

When a volume of buffered data of the P-UE is higher than the second threshold, the data of the P-UE is transmitted at RLC entities/transmission paths of all the n terminals.

Optionally, when dual-path or multi-path transmission is initiated, the P-UE may perform split of a specific data volume on the basis of information reported/fed back/negotiated, etc., by the S-UE. The process of performing data splitting by the P-UE may include at least one of the following.
(1) The P-UE splits data to the S-UE according to data transmission feedback information from the S-UE. For example, when the data split to the S-UE by the P-UE has been scheduled for transmission, the S-UE may give feedback to the P-UE, and the P-UE may continue to split more data to the S-UE on the basis of feedback from the S-UE.
(2) The P-UE splits data to the S-UE according to the data volume requested by the S-UE. For example, the S-UE can request a subsequent data volume from the P-UE according to its own data sending condition, which can be a specific number of bytes or a bit rate, etc;
(3) The P-UE splits data to the S-UE according to the link quality fed back by the S-UE. For example, the S-UE can feedback its own link quality to the P-UE, and the P-UE performs data splitting according to the link condition of each S-UE participating in transmission by using the basic principle that more data is split to the terminal with good link quality and less data is split to the terminal with poor link quality.
(4) The P-UE splits data to the S-UE according to capability information sent by the S-UE. For example, the S-UE can interact its capability information with the P-UE, and the P-UE performs data splitting according to the capability condition of each S-UE participating in transmission by using the basic principle that more data is split to the terminal with strong capability and less data is split to the terminal with weak capability.
(5) The P-UE splits data to the S-UE according to negotiation information with the S-UE for data splitting. For example, the P-UE can negotiate with each S-UE for data splitting and determine the data rate at which each S-UE can split data, such as an S-UE 1 can split X Bps, an S-UE 2 can split Y Bps, and so on; or the total data rate of the P-UE is M Bps, 30% of total data can be split by the S-UE 1, and 40% of total data can be split by the S-UE 2, and so on.
(6) The P-UE splits data to the S-UE according to control information received from the network-side device for data splitting. For example, a splitting proportion or data rate of each S-UE may be controlled by the base station, where the base station may determine the splitting proportion or a specific data rate of each S-UE according to factors such as the capability, willingness, link quality, etc., on the basis of interaction with each S-UE, and after the splitting proportion or data rate is determined, information about splitting is sent to the P-UE in a manner of a configuration parameter, to be followed for execution by the P-UE.

Optionally, in addition to a volume of buffered data of the P-UE, the P-UE may determine the behavior of data splitting on the basis of a link quality threshold. Whether to configure the link quality threshold may be determined on the basis of the characteristics of the interface between the terminals. For example, when the interface between the terminals is an ideal interface, such as when the terminals are directly connected by a wired data line, there is no need to configure the link quality threshold, and at this time, how to perform data splitting can be determined by the base station according to dynamic information, and the link quality threshold can be configured only when the interface between the terminals is a non-ideal interface and/or the non-ideal interface requires to use the technology of third generation partnership projects (Third Generation Partnership Projects, 3GPP) or an authorized spectrum for transmission.

Optionally, in a case that a first link quality threshold of the P-UE or the S-UE is configured, the P-UE may perform any of the following.

When a signal measurement value of the P-UE or the S-UE is higher than or equal to the first link quality threshold, data transmission is performed at the RLC entity and/or the transmission path of the P-UE.

When the signal measurement value of the P-UE or the S-UE is lower than the first link quality threshold, data transmission is performed at the RLC entity and/or the transmission path of the P-UE, and the RLC entity and/or the transmission path of the S-UE, or, data transmission is performed at the RLC entity and/or the transmission path of the S-UE.

The above signal measurement value may include: a measurement value of reference signal receiving power (Reference Signal Receiving Power, RSRP) and/or a measurement value of reference signal received quality (Reference Signal Received Quality, RSRQ) between the P-UE and a serving cell thereof, or a measure value of RSRP and/or a measure value of RSRQ between the S-UE and a serving cell thereof. The first link quality threshold can be configured on the basis of an actual requirement, and is not limited.

For example, assuming that a link quality threshold of the P-UE is configured, and the threshold is a threshold of the measurement value of RSRP between the P-UE and the serving cell thereof.
(i) When the measurement value of RSRP between the P-UE and the serving cell thereof is higher than or equal to the threshold, the data of the P-UE is transmitted at the RLC entity/transmission path of the P-UE.
(ii) When the measurement value of RSRP between the P-UE and the serving cell thereof is lower than the threshold, the data of the P-UE may be transmitted at the RLC entity/transmission path of the P-UE, and the RLC entity/transmission path of the S-UE.
(iii) Or, when the measurement value of RSRP between the P-UE and the serving cell thereof is lower than the threshold, the data of the P-UE may be transmitted at the RLC entity/transmission path of the S-UE.

The thresholds involved in ii) and iii) above may be configured to be different, for example, being threshold 1 and threshold 2, and when the threshold is threshold 1 and the measurement value of RSRP between the P-UE and the serving cell thereof is lower than threshold 1, the data of the P-UE may be transmitted at the RLC entity/transmission path of the P-UE, and the RLC entity/transmission path of the S-UE. Or, when the threshold 2 is configured and the measurement value of RSRP between the P-UE and the serving cell thereof is lower than threshold 2, the data of the P-UE is transmitted at the RLC entity/transmission path of the S-UE.

For another example, assuming that a link quality threshold of the S-UE is configured, and the threshold is a threshold of the measurement value of RSRP between the SUE and the serving cell thereof.
(a) When the measurement value of RSRP between the S-UE and the serving cell thereof is higher than or equal to the threshold, the data of the P-UE is transmitted at the RLC entity/transmission path of the P-UE.
(b) When the measurement value of RSRP between the S-UE and the serving cell thereof is lower than the threshold, the data of the P-UE may be transmitted at the RLC entity/transmission path of the P-UE, and the RLC entity/transmission path of the S-UE.
(c) Or, when the measurement value of RSRP between the S-UE and the serving cell thereof is lower than the threshold, the data of the P-UE may be transmitted at the RLC entity/transmission path of the S-UE.

The thresholds involved in b) and c) above may be configured to be different, for example, being threshold 1 and threshold 2, and when the threshold is threshold 1 and the measurement value of RSRP between the S-UE and the serving cell thereof is lower than threshold 1, the data of the P-UE may be transmitted at the RLC entity/transmission path of the P-UE, and the RLC entity/transmission path of the S-UE. Or, when the threshold 2 is configured and the measurement value of RSRP between the S-UE and the serving cell thereof is lower than threshold 2, the data of the P-UE is transmitted at the RLC entity/transmission path of the S-UE.

In some embodiments, in a case that the number of the S-UEs is s and s is greater than or equal to 2, 1 to s S-UE thresholds may be configured for the s S-UEs or groups of the S-UEs, respectively, and information about split of the data of the P-UE is determined by taking the link quality of the S-UE into full account.

Optionally, in a case that a second link quality threshold of the P-UE and a third link quality threshold of the S-UE are configured, the P-UE may perform any of the following.

In a case that a first condition is satisfied, or a second condition is not satisfied, data transmission is performed at an RLC entity and/or a transmission path of the P-UE.

In a case that the first condition is not satisfied, or the second condition is satisfied, data transmission is performed at an RLC entity and/or a transmission path of the P-UE, and an RLC entity and/or a transmission path of the S-UE, or, data transmission is performed at an RLC entity and/or a transmission path of the S-UE.

The first condition includes that: a signal measurement value of the P-UE is higher than or equal to the second link quality threshold, and a signal measurement value of the S-UE is lower than the third link quality threshold. The second condition includes that: a signal measurement value of the P-UE is lower than the second link quality threshold, and a signal measurement value of the S-UE is higher than or equal to the third link quality threshold.

The above signal measurement value may include: a measurement value of RSRP and/or a measurement value of RSRQ, etc., between the P-UE and a servicing cell thereof, or, a measurement value of RSRP and/or a measurement value of RSRQ, etc., between the S-UE and a serving cell thereof. The second link quality threshold and the third link quality threshold can be configured on the basis of an actual requirement, and are not limited.

For example, assuming that the link quality threshold of the P-UE and the link quality threshold of the S-UE are configured at the same time, the P-UE threshold is the threshold of the measurement value of RSRP between the P-UE and the servicing cell thereof, and the S-UE threshold is the threshold of the measurement value of RSRP between the S-UE and the servicing cell thereof.
(1) When the measurement value of RSRP between the P-UE and the serving cell thereof is higher than or equal to the P-UE threshold, and the measurement value of RSRP between the S-UE and the serving cell thereof is lower than the S-UE threshold (condition 1), the data of the P-UE is transmitted at the RLC entity/transmission path of the P-UE.
(2) When condition 1 above cannot be satisfied at the same time, the data of the P-UE can be transmitted at the RLC entity/transmission path of the P-UE, and the RLC entity/transmission path of the S-UE.
(3) Or, when condition 1 above cannot be satisfied at the same time, the data of the P-UE may be transmitted at the RLC entity/transmission path of the S-UE.
(4) When the measurement value of RSRP between the P-UE and the serving cell thereof is lower than the P-UE threshold, and the measurement value of RSRP between the SUE and the serving cell thereof is higher than or equal to the S-UE threshold (condition 2), the data of the P-UE may be transmitted at the RLC entity/transmission path of the P-UE, and the RLC entity/transmission path of the S-UE.
(5) Or, when the measurement value of RSRP between the P-UE and the serving cell thereof is lower than the P-UE threshold, and the measurement value of RSRP between the S-UE and the serving cell thereof is higher than or equal to the S-UE threshold (condition 2), the data of the P-UE may be transmitted at the RLC entity/transmission path of the S-UE.
(6) When condition 2 above cannot be satisfied at the same time, the data of the P-UE is transmitted at the RLC entity/transmission path of the P-UE.

The thresholds involved in 2) and 3) above may be configured to be different and the thresholds involved in 4) and 5) above may be configured to be different. In a case that the number of the S-UEs is s and s is greater than or equal to 2, 1 to s S-UE thresholds may be configured for the s S-UEs or groups of the S-UEs, respectively, and information about split of the data of the P-UE is determined by taking the link quality of the S-UE into full account.

In some embodiments, in a case that dual-path or multi-path transmission is initiated on the basis of the link quality of the P-UE/S-UE, the P-UE may perform split of a specific data volume on the basis of information reported/fed back/negotiated, etc., by the SUE.

### Case III:

In case III, the interface between the terminals is a non-ideal interface, i.e., a non-ideal backhaul is between the terminals, and the PDCP anchor architecture shown in FIG. 2A can be used, i.e., there is a common PDCP entity, and an RLC entity associated with the PDCP entity is located in a different P-UE and S-UE.

Optionally, for the PDCP duplication function, in a case that the PDCP duplication function is configured for the radio bearer (Radio Bearer, RB) of the P-UE, the PDCP duplication function is activated, and the P-UE contains at least two RLC entities associated with a PDCP entity of the radio bearer, the at least two RLC entities of the P-UE respectively use corresponding component carrier (Component Carrier, CC) groups (group) thereof to perform transmission of duplicated data. Or, in a case that the PDCP duplication function is configured for the radio bearer of the P-UE, the PDCP duplication function is deactivated and the P-UE contains at least two RLC entities associated with the PDCP entity of the radio bearer, a primary RLC entity of the P-UE uses all activated CCs of the P-UE to perform transmission of split data.

Optionally, for the PDCP duplication function, in a case that the PDCP duplication function is configured for the radio bearer of the P-UE, the radio bearer includes L transmission paths, and the PDCP duplication function of the L transmission paths is activated, the P-UE may duplicate PDUs of PDCP data to be transmitted to L parts, and transmit the duplicated L parts of PDUs of PDCP data in the L transmission paths, respectively. Optionally, in a case that the PDCP duplication function is configured for the radio bearer of the P-UE, the radio bearer includes L transmission paths, and the PDCP duplication function of P transmission paths in the L transmission paths is activated, the P-UE may duplicate PDUs of PDCP data to be transmitted by P parts, and transmit the duplicated P parts of PDUs of PDCP data in the P transmission paths, respectively. L is greater than 2 and L is greater than P. The P transmission paths include a primary transmission path of the radio bearer.

For example, when the PDCP duplication function is configured for one RB, two or more RLC entities may be included within a particular P-UE/S-UE, and are associated with a same one PDCP anchor entity. Two or more RLC entities inside the same terminal need to correspond to different CC groups to perform data transmission, and only if the PDCP duplication function is activated, corresponding configured CC groups are distinguished to perform data transmission. Once the PDCP duplication function is de-activated, the primary RLC entity on the P-UE/S-UE can use all activated CCs to perform data transmission, which is not limited by the CC group.

For example, in a scenario where one P-UE carries two S-UEs, the PDCP entity of one RB can be configured to be located in the P-UE, and three corresponding RLC entities thereof are located in the P-UE and the two S-UEs, respectively, so that the PDCP entity is capable of performing transmission of up to three transmission paths. When the PDCP duplication function of all the transmission paths is activated, one PDCP data PDU can be duplicated into three parts to be sent to the P-UE RLC entity and the two S-UE RLC entities, respectively. In addition, only two of the transmission paths can be activated to perform duplication transmission, and the two transmission paths must include a primary transmission path, which is generally defaulted to a transmission path corresponding to the RLC entity (entity) of the P-UE or an RLC entity designated by the configuration. After the PDCP duplication function of all the transmission paths is de-activated, according to the data transmission method in case II above, data transmission can be performed at the primary RLC entity, or splitting transmission is performed at one primary RLC entity and a configured or selected secondary RLC entity, or splitting transmission is performed at one primary RLC entity and all the secondary RLC entities.

For another example, in a scenario where one P-UE carries two S-UEs, the PDCP entity of one RB may be configured to be located in the P-UE, and five corresponding RLC entities of the PDCP anchor are located in the P-UE and the two S-UEs, respectively, and the five RLC entities correspond to 5 transmission paths, respectively. The P-UE contains two RLC entities, an RLC entity 1 corresponds to a CC group containing a CC1 (primary CC), a CC2 and a CC3, the RLC entity 1 is a default primary RLC entity, and an RLC entity 2 corresponds to a CC group containing a CC4 and a CC5. An S-UE1 contains two RLC entities, an RLC entity 3 corresponds to a CC group containing a CC6 (primary) and a CC7, the RLC entity 6 is a default reserved RLC entity, and an RLC entity 4 corresponds to a CC group containing a CC8 and a CC9. A secondary UE2 contains one RLC entity, and an RLC entity 5 corresponds to all CCs of the S-UE2. Then, when the PDCP duplication function is activated, all the 5 transmission paths can be activated, i.e., the PDCP data PDUs are duplicated into 5 parts to be transmitted in a manner of the 5 transmission paths, respectively, or the PDCP duplication function can be activated on any 3 of the transmission paths, the primary transmission path must be included, and the PDCP data PDUs are duplicated into 3 parts and transmitted in a manner of the 3 transmission paths where duplication is activated to perform transmission. When PDCP duplication of the RLC entity of a particular UE is activated, data transmission may be performed according to a CC group corresponding to its own configuration, and when the PDCP duplication function of the RLC entity of a particular UE is de-activated, an RLC entity corresponding to the primary CC is reserved as an RLC splitting entity of the UE, and the RLC splitting entity can use all the activated CCs of the UE to perform transmission, without being limited by the CC group. After the PDCP duplication function of all the transmission paths is de-activated, according to the data transmission method in case II above, data transmission can be performed at the primary RLC entity, or splitting transmission is performed at one primary RLC entity and a configured or selected secondary RLC entity, or splitting transmission is performed at one primary RLC entity and all the secondary RLC entities.

Optionally, the P-UE may receive configuration information from the network-side device. The indication information is used to indicate the P-UE to activate or de-activate the duplication function. The duplication function is for example a PDCP duplication function. The indication information may be sent for example via RRC signaling or MAC CE.

It is to be noted that Since PDCP duplication requires an additional transmission resource, it needs to be performed under the control of the network-side device. Generally, the configuration can be performed in a manner of RRC signaling. For example, the configuration information can be sent by the same serving base station to the P-UE and the S-UE, respectively, and consistency and coordination between the configurations can be ensured, i.e., a case that because of mismatch of the configurations between the P-UE and the S-UE, operation fails is avoided. After receiving the configuration, the P-UE and the S-UE can respectively build their RLC entity architectures for duplication. When the PDCP duplication function is configured, an initial state of the PDCP duplication function can be directly designated, i.e., the initial state means activation or de-activation, or some of the RLC entities therein are activated, or the primary transmission path (primary RLC entity) corresponding to the entire PDCP anchor can also be configured, and the reserved RLC entity located in the RLC entity of each terminal is configured.

In addition, for the RLC entity configured with the PDCP duplication function, except for the primary RLC entity, the primary RLC entity can be either default or designated, and whether the remaining RLC entities participate in PDCP duplication can be dynamically determined by the network-side device. For example, whether a secondary RLC entity participates in PDCP duplication can be indicated in a manner of the MAC CE, the MAC CE can contain multiple bits, which represent different secondary RLC entities, respectively, for example, when a certain bit is 1, it can indicate to activate the PDCP duplication function of the corresponding secondary RLC entity, and when a certain bit is 0, it can indicate to de-activate the PDCP duplication function of the corresponding secondary RLC entity. For the RLC entity where the PDCP duplication function is activated, a duplicated PDCP data PDU is sent to the RLC entity to participate in duplication transmission, while the RLC entity where the PDCP duplication function is deactivated does not participate in duplication transmission. When the PDCP duplication function of all RLC entities is de-activated, data splitting can be performed in accordance with the split rule in case II above.

### Case IV:

In case IV, the interface between the terminals is an ideal interface, i.e., an ideal backhaul is between the terminals, any one of the UP protocol stack architectures in FIG. 2A to FIG. 2C can be selected. When the PDCP anchor architecture shown in FIG. 2A is used, data processing may be performed in accordance with case III above.

Optionally, the process of performing data splitting or data duplication transmission by the P-UE may include any of the following.

In a case that the UP protocol stack architecture of the P-UE is a PDCP anchor architecture, the P-UE performs data splitting or data duplication transmission at the data granularity of a PDCP PDU.

In a case that the UP protocol stack architecture of the P-UE is a RLC anchor architecture, the P-UE performs data splitting or data duplication transmission at the data granularity of a RLC PDU.

In a case that the UP protocol stack architecture of the P-UE is an MAC anchor architecture, the P-UE performs data splitting or data duplication transmission at the data granularity of an MAC PDU.

In other words, since the interface between the terminals is an ideal interface, in addition to selecting the PDCP anchor architecture, the UP protocol stack architecture of the P-UE can select other more flexible architectures, such as selecting an RLC anchor architecture or an MAC anchor architecture. If the PDCP anchor architecture is selected, the granularity of data splitting/duplication is a PDCP PDU, which is a PDCP layer PDU, and may contain at least one of a PDCP initial transmission PDU, a PDCP retransmission PDU, and a PDCP status PDU. If the RLC anchor architecture is selected, the granularity of data splitting/duplication is an RLC PDU, which is an RLC layer PDU, and may contain at least one of an RLC initial transmission PDU, an RLC retransmission PDU, and an RLC status PDU. If the MAC anchor architecture is selected, the granularity of data splitting/duplication is an MAC PDU, which is an MAC layer PDU, and may contain at least one of an MAC data PDU and an MAC control PDU. For example, the entire MAC PDU may be duplicated, i.e., the size of an allocated resource block of each terminal participating in duplication is required to be the same, and in the same resource size, the duplicated MAC PDU is transmitted. In addition, each terminal may perform HARQ feedback or retransmission independently, or association may be introduced, i.e., when the HARQ transmission of one of the terminals is successful, the HARQ feedback of each terminal is fed back to confirm an ACK, or when HARQ retransmission is required, HARQ retransmission is performed at all the terminals.

Optionally, since the interface between the terminals is an ideal interface, a real-time response to data processing can be faster, so when at a certain moment, uplink grant resources obtained by the P-UE and the S-UE are of different sizes, the P-UE and the S-UE can transmit split data, respectively, and when the uplink grant resources obtained by the P-UE and the S-UE are of the same size, the P-UE and the S-UE automatically perform transmission of duplicated data. The above process of performing data splitting or data duplication transmission may include. In a case that the uplink grant resources of the P-UE and the S-UE are in different sizes, the P-UE performs data splitting. Or, in a case that the uplink grant resources of the P-UE and the S-UE are in the same size, the P-UE performs data duplication transmission.

It is to be noted that in addition to the above implicit derivation about whether or not to perform duplication transmission according to the size of the scheduled resource, an explicit indication in scheduling signaling may be used to determine whether or not to perform duplication transmission.

Optionally, the P-UE may receive configuration information from the network-side device. The indication information is used to indicate the P-UE to activate or de-activate the duplication function. The duplication function is for example a PDCP duplication function. The indication information may be sent for example via RRC signaling or MAC CE.

For example, an additional 1 bit of indication information can be added to the scheduling signaling of the P-UE, and the indication information indicates whether to perform duplication transmission or not, or the indication information can be set to a default value, the default value means activation/de-activation of the duplication function, and the meaning of the default value can be specified by a standard or configured by the signaling. In addition, it is also possible to set an effective range for the above indication information in the scheduling signaling, such as being effective only at a current transport time interval (Transport Time Interval, TTI), or effective within a certain time range, which may be specified by a protocol or configured by signaling, or effective until the next receipt of explicit scheduling indication information of a change of state.

The above embodiments illustrate the data splitting and data duplication transmission process related to the P-UE, and the following will illustrate the related content of the S-UE.

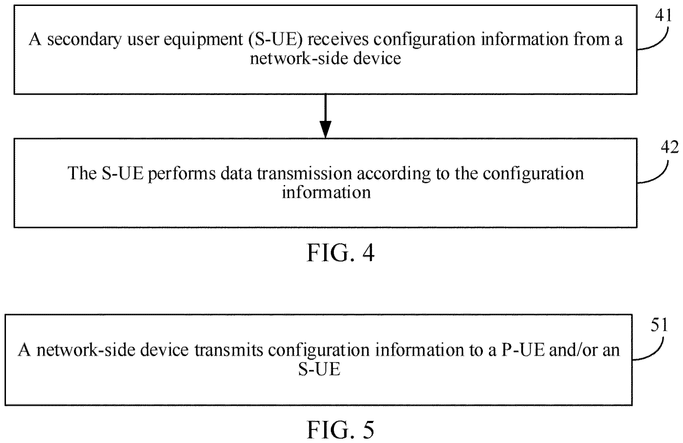

Please refer to FIG. 4, FIG. 4 is a flowchart of a data transmission method provided by an embodiment of this application. The method is executed by an S-UE. As shown in FIG. 4, the method includes the following steps:
Step 41: The S-UE receives configuration information from a network-side device. The S-UE is capable of performing joint data transmission with a P-UE.
Step 42: The S-UE performs data transmission according to the configuration information.

The P-UE is capable of performing joint data transmission with an S-UE. In other words, for data of a certain service or data of the P-UE, the data can be transmitted jointly on the P-UE and the S-UE, i.e., data transmission is performed jointly between the P-UE and the S-UE.

In the data transmission method of the embodiment of this application, the S-UE may receive the configuration information from the network-side device, and perform data transmission according to the configuration information, where the S-UE is capable of performing joint data transmission with the P-UE. As a result, it is possible to define a method of data splitting or data duplication transmission under a terminal aggregation architecture, so that the data of a single user can fully and efficiently use links of a plurality of terminals for transmission, thus improving the service experience of a user and guaranteeing the quality of service (Quality of Service, QoS) of services, which improves the experience of the user and guarantees the system efficiency at the same time.

Optionally, the above performing data transmission may include. In a case that a PDCP duplication function is configured for a radio bearer of the P-UE, the PDCP duplication function is activated and the S-UE contains at least two RLC entities associated with a PDCP entity of the radio bearer, the at least two RLC entities of the S-UE use corresponding CC groups thereof to perform transmission of duplicated data. Or, in a case that the PDCP duplication function is configured for the radio bearer of the P-UE, the PDCP duplication function is de-activated and the S-UE contains at least two RLC entities associated with the PDCP entity of the radio bearer, a primary RLC entity of the S-UE uses all activated CCs of the S-UE to perform transmission of split data.

For example, when the PDCP duplication function is configured for one RB, two or more RLC entities may be included within a particular P-UE/S-UE, and are associated with a same one PDCP anchor entity. Two or more RLC entities inside the same terminal need to correspond to different CC groups to perform data transmission, and only if the PDCP duplication function is activated, corresponding configured CC groups are distinguished to perform data transmission. Once the PDCP duplication function is de-activated, the primary RLC entity on the P-UE/S-UE can use all activated CCs to perform data transmission, which is not limited by the CC group.

Optionally, the above configuration information may be used to indicate at least one of the following:
configuring a duplication function for a radio bearer of the P-UE, or, not configuring a duplication function for a radio bearer of the P-UE; for example, whether to configure a duplication function/mechanism for a data radio bearer (Data Radio Bearer, DRB) can be indicated;
a protocol layer with the duplication function; for example, the duplication function may reside in a PDCP layer, an MAC layer, or the like;
a primary RLC entity of the radio bearer of the P-UE; for example, an RLC entity of the P-UE may be defaulted to be a primary RLC entity, or may explicitly indicate a primary RLC entity;
conditions for data splitting (split);
a threshold for data splitting; for example, the threshold may be a link quality threshold of a terminal where the primary RLC entity is located, or a link quality threshold of a terminal where a secondary RLC entity is located, or the like; the link is optionally a Uu link, which is not limited;
a threshold for a volume of buffered data of the P-UE; for example, if the buffered data volume does not exceed a first threshold, only the P-UE participates in transmission; if the buffered data volume exceeds the first threshold, one S-UE may be activated to participate in transmission; if the buffered data volume exceeds a second threshold, another S-UE may be activated to participate in transmission, where the second threshold is greater than the first threshold; and so on;
a split bearer configured by the network-side device for the P-UE;
a split bearer configured by the network-side device for a PDCP entity being located at the P-UE;
the split bearer configured by the network-side device for the PDCP entity being located at the P-UE, the PDCP entity being associated with at least two RLC entities, and each of RLC entities being located at a different P-UE or S-UE;
a type of the split bearer configured by the network-side device; for example, the type is a PDCP anchor, an RLC anchor or an MAC anchor, etc;
a standardized interface being used between the P-UE and the S-UE; for example, the interface is a PC5 interface or the like;
a non-standardized interface being used between the P-UE and the S-UE;
a non-ideal interface being between the P-UE and the S-UE; for example, the non-ideal interface is a wireless interface, or an interface with a transmission delay greater than or equal to a certain threshold, etc.
an ideal interface being between the P-UE and the S-UE; for example, the ideal interface is in wired connection, or is an interface with a transmission delay less than or equal to a certain threshold, etc;
a data splitting manner used by the P-UE; and
a data duplication manner used by the P-UE.

In this way, according to the above configuration information, the network-side device and the S-UE may be operated in accordance with a unified data splitting or duplication manner. That is, after configuration of the network-side device is completed, the network-side device and the S-UE have the same perception and understanding on the data splitting or duplication manner, and subsequent operation is performed in accordance with rules.

Optionally, the S-UE may receive scheduling information from the network-side device, and the scheduling information is used to indicate the uplink grant resource allocated for the S-UE. Then, according to the size of the uplink grant resource, a data request is sent to the P-UE and a second data packet is received from the P-UE, and the second data packet is generated by the P-UE according to the size of the uplink grant resource.

Optionally, the S-UE may send first information to the P-UE and receive data splitting by the P-UE according to the first information. The first information includes at least one of the following:
data transmission feedback information;
the data volume requested;
link quality; and
capacity information.

Please refer to FIG. 5, FIG. 5 is a flowchart of a configuration method provided by an embodiment of this application. The method is executed by a network-side device. As shown in FIG. 5, the method includes the following steps.

Step 51: The network-side device sends configuration information to a P-UE and/or an S-UE.

The P-UE is capable of performing joint data transmission with the S-UE. The above configuration information may be used to indicate at least one of the following:
configuring a duplication function for a radio bearer of the P-UE, or, not configuring a duplication function for a radio bearer of the P-UE; for example, whether to configure a duplication function/mechanism for a data radio bearer (Data Radio Bearer, DRB) can be indicated;
a protocol layer with the duplication function; for example, the duplication function may reside in a PDCP layer, an MAC layer, or the like;
a primary RLC entity of the radio bearer of the P-UE; for example, an RLC entity of the P-UE may be defaulted to be a primary RLC entity, or may explicitly indicate a primary RLC entity;
conditions for data splitting (split);
a threshold for data splitting; for example, the threshold may be a link quality threshold of a terminal where the primary RLC entity is located, or a link quality threshold of a terminal where a secondary RLC entity is located, or the like; the link is optionally a Uu link, which is not limited;
a threshold for a volume of buffered data of the P-UE; for example, if the buffered data volume does not exceed a first threshold, only the P-UE participates in transmission; if the buffered data volume exceeds the first threshold, one S-UE may be activated to participate in transmission; if the buffered data volume exceeds a second threshold, another S-UE may be activated to participate in transmission, where the second threshold is greater than the first threshold; and so on;
a split bearer configured by the network-side device for the P-UE;
a split bearer configured by the network-side device for a PDCP entity being located at the P-UE;
the split bearer configured by the network-side device for the PDCP entity being located at the P-UE, the PDCP entity being associated with at least two RLC entities, and each of RLC entities being located at a different P-UE or S-UE;
a type of the split bearer configured by the network-side device; for example, the type is a PDCP anchor, an RLC anchor or an MAC anchor, etc;
a standardized interface being used between the P-UE and the S-UE; for example, the interface is a PC5 interface or the like;
a non-standardized interface being used between the P-UE and the S-UE;
a non-ideal interface being between the P-UE and the S-UE; for example, the non-ideal interface is a wireless interface, or an interface with a transmission delay greater than or equal to a certain threshold, etc.
an ideal interface being between the P-UE and the S-UE; for example, the ideal interface is in wired connection, or is an interface with a transmission delay less than or equal to a certain threshold, etc;
a data splitting manner used by the P-UE; and
a data duplication manner used by the P-UE.

In this way, according to the above configuration information, the network-side device and the P-UE/S-UE may have the same perception and understanding on a data splitting or duplication manner and may be operated in accordance with a unified data splitting or duplication manner.

Optionally, the network-side device may send indication information to the P-UE, and the indication information is used to indicate the P-UE to activate or de-activate the duplication function.

Optionally, the network-side device may allocate uplink grant resources for the P-UE and the S-UE according to a BSR of the P-UE.

Optionally, the network-side device may allocate an uplink grant resource for the P-UE according to a BSR of the P-UE, and allocate an uplink grant resource for the S-UE according to a BSR of the S-UE.

Optionally, in a case that the duplication function is activated, the network-side device may allocate uplink grant resources of the same size for the P-UE and the S-UE.

In the data transmission method provided by the embodiment of this application, an executing body may be a data transmission apparatus. In the embodiment of this application, executing, by a data transmission apparatus, a data transmission method is used as an example to illustrate the data transmission apparatus provided by the embodiment of this application.

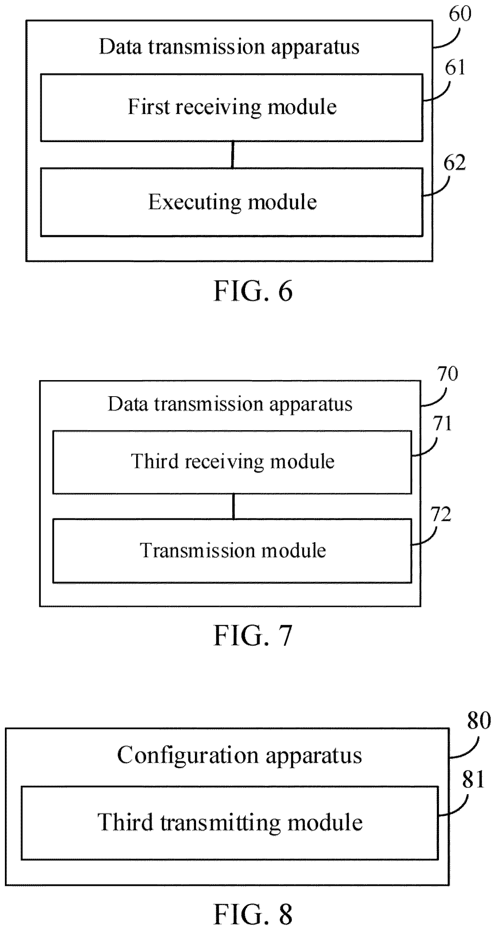

Please refer to FIG. 6, FIG. 6 is a schematic structural diagram of a data transmission apparatus provided by an embodiment of this application. The apparatus is applied to a P-UE. As shown in FIG. 6, a data transmission apparatus 60 includes:
a first receiving module 61, configured to receive configuration information from a network-side device, where the P-UE is capable of performing joint data transmission with an S-UE; and
an executing module 62, configured to perform data splitting or data duplication transmission according to the configuration information.

Optionally, the data transmission apparatus 60 further includes:
a processing module, configured to execute at least one of the following.

Data to be transmitted is buffered in its own buffer.

According to a volume of buffered data of itself, a BSR reporting process is performed.

Optionally, the executing module 62 is configured to execute at least one of the following.

A first data packet is generated in a manner of a data splitting or duplication according to the size of an uplink grant resource allocated for the P-UE by the network-side device, and the first data packet is sent.

A data request sent by the S-UE according to the size of its uplink grant resource is received, a second data packet is generated according to the size of the uplink grant resource and in a manner of a data splitting or duplication, and the second data packet is sent to the SUE.

Scheduling information of the S-UE is received, the size of the uplink grant resource of the S-UE is determined according to the scheduling information, a third data packet is generated according to the size of the uplink grant resource and in a manner of a data splitting or duplication, and the third data packet is sent to the S-UE.

A fourth data packet is sent to the S-UE according to an UP protocol stack architecture of the P-UE in a manner of a data splitting or duplication.

Optionally, in a case that there are M-1 data volume thresholds and M Radio Link Control (RLC) entity sets, the M-1 data volume thresholds include a first threshold, a second threshold ... an (M-1)^{th} threshold, the M RLC entity sets include a first RLC entity set, a second RLC entity set ... an M* RLC entity set, and M is greater than 1, the executing module 62 is configured to execute any of the following.

In a case that a volume of buffered data of the P-UE is lower than the first threshold, data transmission is performed at the first RLC entity set.

In a case that a volume of buffered data of the P-UE is higher than or equal to the first threshold and lower than the second threshold, data transmission is performed at the first RLC entity set and the second RLC entity set.

In a case that a volume of buffered data of the P-UE is higher than or equal to the second threshold and lower than the third threshold, data transmission is performed at the first RLC entity set, the second RLC entity set and the third RLC entity set.

And so on, in a case that a volume of buffered data of the P-UE is higher than the (M-1)^{th} threshold, data transmission is performed at the M RLC entity sets.

Optionally, the executing module 62 is configured to execute at least one of the following.

Data is split to the S-UE according to data transmission feedback information from the S-UE.

Data is split to the S-UE according to the data volume requested by the S-UE.

Data is split to the S-UE according to the link quality fed back by the S-UE.

Data is split to the S-UE according to capability information sent by the S-UE.

Data is split to the S-UE according to negotiation information with the S-UE for data splitting.

Data is split to the S-UE according to control information received from the network-side device for data splitting.

Optionally, in a case that a first link quality threshold of the P-UE or the S-UE is configured, the executing module 62 is configured to execute any of the following.

In a case that a signal measurement value of the P-UE or the S-UE is higher than or equal to the first link quality threshold, data transmission is performed at an RLC entity and/or a transmission path of the P-UE.

In a case that a signal measurement value of the P-UE or the S-UE is lower than the first link quality threshold, data transmission is performed at an RLC entity and/or a transmission path of the P-UE, and an RLC entity and/or a transmission path of the S-UE, or, data transmission is performed at an RLC entity and/or a transmission path of the S-UE.

Or, in a case that a second link quality threshold of the P-UE and a third link quality threshold of the S-UE are configured, the executing module 62 is configured to execute any of the following.

In a case that a first condition is satisfied, or a second condition is not satisfied, data transmission is performed at an RLC entity and/or a transmission path of the P-UE.

In a case that the first condition is not satisfied, or the second condition is satisfied, data transmission is performed at an RLC entity and/or a transmission path of the P-UE, and an RLC entity and/or a transmission path of the S-UE, or, data transmission is performed at an RLC entity and/or a transmission path of the S-UE.

The first condition includes that: a signal measurement value of the P-UE is higher than or equal to the second link quality threshold, and a signal measurement value of the S-UE is lower than the third link quality threshold.

The second condition includes that: a signal measurement value of the P-UE is lower than the second link quality threshold, and a signal measurement value of the S-UE is higher than or equal to the third link quality threshold.

Optionally, in a case that a PDCP duplication function is configured for a radio bearer of the P-UE, the PDCP duplication function is activated and the P-UE contains at least two RLC entities associated with a PDCP entity of the radio bearer, the executing module 62 is specifically configured to: respectively use corresponding CC groups to perform transmission of duplicated data in a manner of the at least two RLC entities.

Or, in a case that the PDCP duplication function is configured for the radio bearer of the P-UE, the PDCP duplication function is de-activated and the P-UE contains at least two RLC entities associated with the PDCP entity of the radio bearer, the executing module 62 is specifically configured to: use all activated CCs of the P-UE to perform transmission of split data in a manner of the primary RLC entity of the P-UE.

Optionally, the executing module 62 is configured to execute any of the following.

Optionally, in a case that the PDCP duplication function is configured for the radio bearer of the P-UE, the radio bearer includes L transmission paths, and the PDCP duplication function of the L transmission paths is activated, data protocol units (PDU) of PDCP data to be transmitted are duplicated to L parts, and the duplicated L parts of PDUs of PDCP data are transmitted in the L transmission paths, respectively.

In a case that the PDCP duplication function is configured for the radio bearer of the P-UE, the radio bearer includes L transmission paths, and the PDCP duplication function of P transmission paths in the L transmission paths is activated, PDUs of PDCP data to be transmitted are duplicated to P parts, and the duplicated P parts of PDUs of PDCP data are transmitted in the P transmission paths, respectively.

L is greater than 2, and L is greater than P. The P transmission paths include a primary transmission path of the radio bearer.

Optionally, the executing module 62 is configured to execute any of the following.

In a case that the UP protocol stack architecture of the P-UE is a PDCP anchor architecture, data splitting or data duplication transmission is performed at the data granularity of a PDCP PDU.

In a case that the UP protocol stack architecture of the P-UE is a RLC anchor architecture, data splitting or data duplication transmission is performed at the data granularity of a RLC PDU.

In a case that the UP protocol stack architecture of the P-UE is an MAC anchor architecture, data splitting or data duplication transmission is performed at the data granularity of an MAC PDU.

Optionally, the executing module 62 is configured to:
in a case that uplink grant resources of the P-UE and uplink grant resources of the S-UE are in different sizes, perform data splitting; or, in a case that uplink grant resources of the P-UE and uplink grant resources of the S-UE are in the same size, perform data duplication transmission.

Optionally, the data transmission apparatus 60 further includes:
a second receiving module, configured to receive configuration information from a network-side device. The indication information is used to indicate the P-UE to activate or de-activate the duplication function.

Optionally, the configuration information is used to indicate at least one of the following:
configuring a duplication function for a radio bearer of the P-UE, or, not configuring a duplication function for a radio bearer of the P-UE;
a protocol layer with the duplication function;
a primary RLC entity of the radio bearer of the P-UE;
conditions for data splitting;
a threshold for data splitting;
a threshold for a volume of buffered data of the P-UE;
a split bearer configured by the network-side device for the P-UE;
a split bearer configured by the network-side device for a PDCP entity being located at the P-UE;
the split bearer configured by the network-side device for the PDCP entity being located at the P-UE, the PDCP entity being associated with at least two RLC entities, and each of the RLC entities being located at a different P-UE or S-UE;
a type of the split bearer configured by the network-side device;
a standardized interface being used between the P-UE and the S-UE;
a non-standardized interface being used between the P-UE and the S-UE;
a non-ideal interface being between the P-UE and the S-UE;
an ideal interface being between the P-UE and the S-UE;
a data splitting manner used by the P-UE; and
a data duplication manner used by the P-UE.

The data transmission apparatus 60 in the embodiment of this application may be an electronic device, such as an electronic device with an operating system, or a component in the electronic device, such as an integrated circuit or a chip. The electronic device may be a terminal or may be other devices other the terminal. Exemplarily, the terminal may include, but not limited to the type of the terminal 11 illustrated above; other devices can be a server, a network attached storage (Network Attached Storage, NAS) and the like, which is not specifically limited in the embodiment of this application.

The data transmission apparatus 60 provided by the embodiment of this application can implement various processes implemented by the method embodiment of FIG. 3 and achieve the same technical effect, which will not be described in detail to avoid repetition.

Please refer to FIG. 7, FIG. 7 is a schematic structural diagram of a data transmission apparatus provided by an embodiment of this application. The apparatus is applied to an S-UE. As shown in FIG. 7, a data transmission apparatus 70 includes:
a third receiving module 71, configured to receive configuration information from a network-side device, where the S-UE is capable of performing joint data transmission with a P-UE; and
a transmission module 72, configured to perform data transmission according to the configuration information.

Optionally, in a case that a PDCP duplication function is configured for a radio bearer of the P-UE, the PDCP duplication function is activated and the S-UE contains at least two RLC entities associated with a PDCP entity of the radio bearer, the transmission module 72 is specifically configured to: respectively use corresponding CC groups to perform transmission of duplicated data in a manner of the at least two RLC entities.

Or, in a case that the PDCP duplication function is configured for the radio bearer of the P-UE, the PDCP duplication function is de-activated and the S-UE contains at least two RLC entities associated with the PDCP entity of the radio bearer, the transmission module 72 is specifically configured to: use all activated CCs of the S-UE to perform transmission of split data in a manner of the primary RLC entity of the S-UE.

Optionally, the configuration information is used to indicate at least one of the following:
configuring a duplication function for a radio bearer of the P-UE, or, not configuring a duplication function for a radio bearer of the P-UE;
a protocol layer with the duplication function;
a primary RLC entity of the radio bearer of the P-UE;
conditions for data splitting;
a threshold for data splitting;
a threshold for a volume of buffered data of the P-UE;
a split bearer configured by the network-side device for the P-UE;
a split bearer configured by the network-side device for a PDCP entity being located at the P-UE;
the split bearer configured by the network-side device for the PDCP entity being located at the P-UE, the PDCP entity being associated with at least two RLC entities, and each of the RLC entities being located at a different P-UE or S-UE;
a type of the split bearer configured by the network-side device;
a standardized interface being used between the P-UE and the S-UE;
a non-standardized interface being used between the P-UE and the S-UE;
a non-ideal interface being between the P-UE and the S-UE;
an ideal interface being between the P-UE and the S-UE;
a data splitting manner used by the P-UE; and
a data duplication manner used by the P-UE.

Optionally, the third receiving module 72 is further configured to: receive scheduling information from the network-side device. The scheduling information is used to indicate an uplink grant resource allocated for the S-UE.

The data transmission apparatus 70 further includes:
a first transmitting module, configured to transmit a data request to the P-UE according to the size of the uplink grant resource; and
a fourth receiving module, configured to receive a second data packet from the P-UE, where the second data packet is generated by the P-UE according to the size of the uplink grant resource.

Optionally, the data transmission apparatus 70 further includes:
a second transmitting module, configured to transmit first information to the P-UE; and
a fifth receiving module, configured to receive data splitting by the P-UE according to the first information.

The first information includes at least one of the following:
data transmission feedback information;
the data volume requested;
link quality; and
capacity information.

The data transmission apparatus 70 in the embodiment of this application may be an electronic device, such as an electronic device with an operating system, or a component in the electronic device, such as an integrated circuit or a chip. The electronic device may be a terminal or may be other devices other the terminal. Exemplarily, the terminal may include, but not limited to the type of the terminal 11 illustrated above; other devices can be a server, a network attached storage (Network Attached Storage, NAS) and the like, which is not specifically limited in the embodiment of this application.

The data transmission apparatus 70 provided by the embodiment of this application can implement various processes implemented by the method embodiment of FIG. 4 and achieve the same technical effect, which will not be described in detail to avoid repetition.

In the configuration method provided by the embodiment of this application, an executing body may be a configuration apparatus. In the embodiment of this application, executing, by a configuration apparatus, a configuration method is used as an example to illustrate the configuration apparatus provided by the embodiment of this application.

In the above embodiment, the related content of a P-UE and an S-UE is described, and a configuration process of a network-side device is described below.

Please refer to FIG. 8, FIG. 8 is a schematic structural diagram of a configuration apparatus provided by an embodiment of this application. The apparatus is applied to a network-side device. As shown in FIG. 8, the configuration apparatus 80 includes:
a third transmitting module 81, configured to transmit configuration information to a P-UE and/or an S-UE,
where the P-UE is capable of performing joint data transmission with the S-UE; the configuration information is used to indicate at least one of the following:
   configuring a duplication function for a radio bearer of the P-UE, or, not configuring a duplication function for a radio bearer of the P-UE;
   a protocol layer with the duplication function;
   a primary RLC entity of the radio bearer of the P-UE;
   conditions for data splitting;
   a threshold for data splitting;
   a threshold for a volume of buffered data of the P-UE;
   a split bearer configured by the network-side device for the P-UE;
   a split bearer configured by the network-side device for a PDCP entity being located at the P-UE;
   the split bearer configured by the network-side device for the PDCP entity being located at the P-UE, the PDCP entity being associated with at least two RLC entities, and each of the RLC entities being located at a different P-UE or S-UE;
   a type of the split bearer configured by the network-side device;
   a standardized interface being used between the P-UE and the S-UE;
   a non-standardized interface being used between the P-UE and the S-UE;
   a non-ideal interface being between the P-UE and the S-UE;
   an ideal interface being between the P-UE and the S-UE;
   a data splitting manner used by the P-UE; and
   a data duplication manner used by the P-UE.

Optionally, the third transmitting module 81 is further configured to: transmit indication information to the P-UE. The indication information is used to indicate the P-UE to activate or de-activate the duplication function.

Optionally, the configuration apparatus 80 further includes
an allocating module, configured to execute at least one of the following.

Uplink grant resources are allocated for the P-UE and the S-UE according to a BSR of the P-UE.

An uplink grant resource is allocated for the P-UE according to a BSR of the P-UE, and an uplink grant resource is allocated for the S-UE according to a BSR of the S-UE.

In a case that the duplication function is activated, uplink grant resources of the same size are allocated for the P-UE and the S-UE.

The configuration apparatus 80 provided by the embodiment of this application can implement various processes implemented by the method embodiment of FIG. 5 and achieve the same technical effect, which will not be described in detail to avoid repetition.

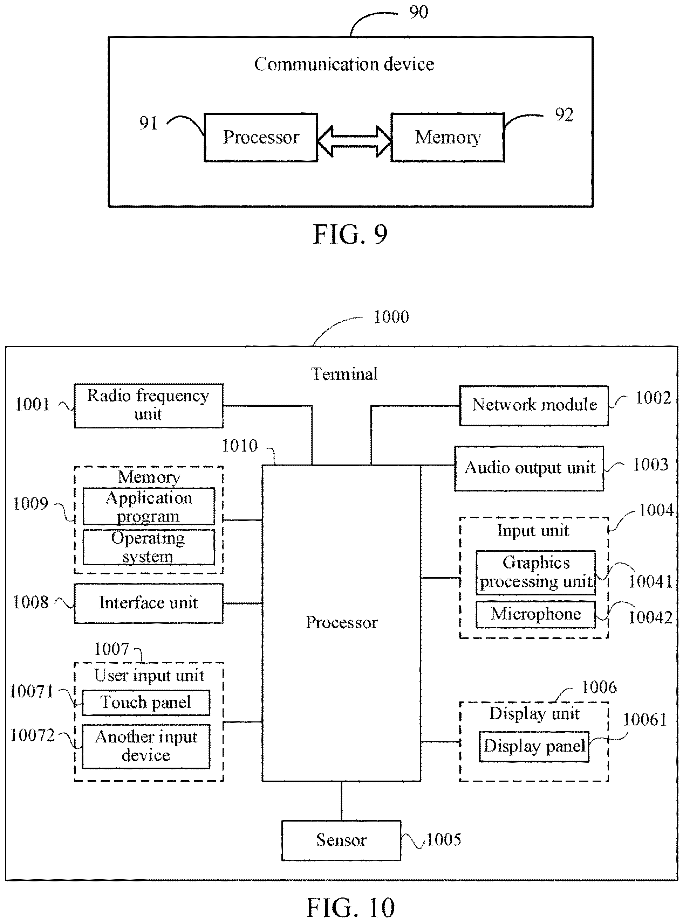

Optionally, as shown in FIG. 9, an embodiment of this application further provides a communication device 90, including a processor 91 and a memory 92. Programs or instructions capable of running on the processor 91 are stored on the memory 92. For example, when the communication device 90 is a P-UE or an S-UE, the program or instruction, when executed by the processor 91, implements the various steps of the above data processing method embodiment, and the same technical effect can be achieved. When the communication device 90 is a network-side device, the program or instruction, when executed by the processor 91, implements the various steps of the above configuration method embodiment, and the same technical effect can be achieved, details of which are omitted here for brevity.

An embodiment of this application further provides a UE, including a processor and a communication interface. For example, in a case that the terminal is a P-UE, the communication interface is configured to receive configuration information from a network-side device, and perform data splitting or data duplication transmission according to the configuration information; Or, in a case that the terminal is an S-UE, the communication interface is configured to receive configuration information from a network-side device, and perform data transmission according to the configuration information. The terminal embodiment may correspond to the above P-UE side method embodiment or the above S-UE side method embodiment, and each implementation process and implementation method of the above method embodiment can be applied in the terminal embodiment, and the same technical effect can be achieved.

Specifically, FIG. 10 is a schematic diagram of a hardware structure of a terminal implementing the embodiments of this application.

The terminal 1000 includes, but is not limited to, at least part of components such as a radio frequency unit 1001, a network module 1002, an audio output unit 1003, an input unit 1004, a sensor 1005, a display unit 1006, a user input unit 1007, an interface unit 1008, a memory 1009 and a processor 1010.

Those skilled in the art may understand that the terminal 1000 may further include a power supply (such as a battery) for supplying power to the various components, the power supply may be logically connected to the processor 1010 by a power management system, thereby implementing functions such as charging, discharging, and power consumption management in a manner of the power management system. The terminal structure shown in FIG. 10 does not constitute a limitation on the terminal, and the terminal may include components more or fewer than components shown in the figure, or combine some components, or have different component arrangements, which will not be described in detail here.

It is to be understood that, in the embodiment of this application, the input unit 1004 may include a graphics processing unit (Graphics Processing Unit, GPU) 10041 and a microphone 10042. The graphics processing unit 10041 performs processing on image data of a static picture or a video that is obtained by an image acquisition device (for example, a camera) in a video acquisition mode or an image acquisition mode. The display unit 1006 may include a display panel 10061. The display panel 10061 may be configured in the form of a liquid crystal display (LCD), an organic light-emitting diode (OLED), or the like. The user input unit 1007 includes at least one of a touch panel 10071 and another input device 10072. The touch panel 10071 is also called a touchscreen. The touch panel 10071 may include two parts: a touch detection apparatus and a touch controller. The another input device 10072 may include, but not limited to, a physical keyboard, a functional key (such as a volume control key or a switch key), a track ball, a mouse, and a joystick, which will not be described in detail here.

In the embodiment of this application, after downlink data from the network-side device is received by the radio frequency unit 1001, the downlink data may be transmitted to the processor 1010 to be processed. In addition, the radio frequency unit 1001 may send uplink data to the network-side device. Generally, the radio frequency unit 1001 includes, but is not limited to, an antenna, an amplifier, a transceiver, a coupler, a low noise amplifier, a duplexer, and the like.

The memory 1009 may be configured to store a software program or instruction and various data. The memory 1009 may mainly include a first storage area for storing programs or instructions and a second storage area for storing data, where the first storage area may store an operating system, an application program or instruction required by at least one function (for example, a sound playback function and an image playback function), and the like. In addition, the memory 1009 may include a volatile memory or a non-volatile memory, or the memory 1009 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM) or a flash memory, The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct RAM bus random access memory (Direct Rambus RAM, DRRAM). The memory 1009 in the embodiment of this application includes, but is not limited to, these memories and any other suitable types of memories.

The processor 1010 may include one or more processing units. Optionally, the processor 1010 integrates an application processor and a modem processor, where the application processor mainly processes and relates to operations of an operating system, a user interface, an application program, and the like, and the modem processor mainly processes a wireless communication signal, such as a baseband processor. It may be understood that the above modem processor may not be integrated into the processor 1010.

Optionally, when the terminal 1000 is a P-UE, the radio frequency unit 1001 is configured to receive configuration information from a network-side device, and perform data splitting or data duplication transmission according to the configuration information. Or, when the terminal 1000 is an S-UE, the radio frequency unit 1001 is configured to receive configuration information from a network-side device, and perform data transmission according to the configuration information.

It is to be understood that when the terminal 1000 is the P-UE, the terminal embodiment corresponds the above P-UE side method embodiment, each implementation process and implementation method of the above method embodiment can be applied in the terminal embodiment, and the same technical effect can be achieved. When the terminal 1000 is the S-UE, the terminal embodiment corresponds the above S-UE side method embodiment, each implementation process and implementation method of the above method embodiment can be applied in the terminal embodiment, and the same technical effect can be achieved, details of which are omitted here for brevity.

An embodiment of this application further provides a network-side device, including a processor and a communication interface. The communication interface is configured to transmit configuration information to a P-UE and/or an S-UE. The network-side device embodiment corresponds to the above network-side device method embodiment, each implementation process and implementation method of the above method embodiment can both be applied in the network-side device embodiment, and the same technical effect can be achieved.

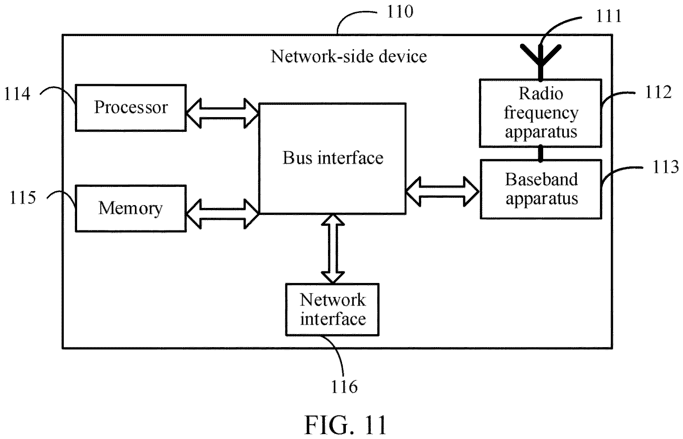

Specifically, an embodiment of this application further provides a network-side device. As shown in FIG. 11, a network-side device 110 includes: an antenna 111, a radio frequency apparatus 112, a baseband apparatus 113, a processor 114, and a memory 115. The antenna 111 is connected to the radio frequency apparatus 112. In the uplink direction, the radio frequency apparatus 112 receives information via the antenna 111 and transmits the received information to the baseband apparatus 113 for processing. In the downlink direction, the baseband apparatus 113 processes information to be sent and sends it to the radio frequency apparatus 112, and the radio frequency apparatus 112 processes the received information and then sends it out in a manner of the antenna 111.

The method executed by the network-side device in the above embodiment may be realized in the baseband apparatus 113, and the baseband apparatus 113 includes a baseband processor.

The baseband apparatus 113 may, for example, include at least one baseband board which is provided with a plurality of chips, as shown in FIG. 11, one of the chips is, for example, a baseband processor, and is connected to the memory 115 via a bus interface to call a program in the memory 115 to execute operations of a network-side device as shown in the above method embodiment.

The network-side device may further include a network interface 116, and the interface is for example a common public radio interface (Common Public Radio Interface, CPRI).

Specifically, the network-side device 110 of the embodiment of the present disclosure further includes: instructions or programs stored on the memory 115 and capable of running on the processor 114, where the processor 114 calls the instruction or program in the memory 115 to execute the method executed by various modules shown in FIG. 8, and the same technical effect can be achieved, details of which are omitted here for brevity.

An embodiment of this application further provide a readable storage medium. Programs or instructions are stored on the readable storage medium. The program or instruction, when executed by a processor, implements the various processes of the above data transmission method embodiment, or implements the various processes of the above configuration method embodiment, and the same technical effect can be achieved, details of which are omitted here for brevity.

The processor is a processor in the terminal in the above embodiment. The readable storage medium includes a computer-readable storage medium, such as, a computer read-only memory (ROM), a random access memory (RAM), a magnetic disk, or an optical disc or the like.

An embodiment of this application further provides a chip. The chip includes a processor and a communication interface. The communication interface is coupled to the processor. The processor is configured to run programs or instructions to implement the various processes of the above data transmission method embodiment, or, implement the various processes of the above configuration method embodiment, and the same technical effect can be achieved, details of which are omitted here for brevity.

It should be understood that the chip referred to in the embodiment of this application may also be referred to as a system-level chip, a system chip, a chip system, or a system-on-a-chip, etc.

An embodiment of this application further provides a computer program/program product, where the computer program/program product is stored in a storage medium, the computer program/program product is executed by at least one processor to implement the various processes of the above data transmission method embodiment, or, implement the various processes of the above configuration method embodiment, and the same technical effect can be achieved, details of which are omitted here for brevity.

An embodiment of this application further provides a communications system, including: a P-UE, an S-UE and a network-side device, where the P-UE may be configured to execute steps of the information reporting method in FIG. 3, the S-UE may be configured to execute steps of the information reporting method in FIG. 4, and the network-side device may be configured to execute steps of the configuration method in FIG. 5.

An embodiment of this application further provides a communication device, configured to execute steps of the information reporting method in FIG. 3, or steps of the information reporting method in FIG. 4, or steps of the configuration method in FIG. 5, and the same technical effect can be achieved, details of which are omitted here for brevity.

It is to be noted that the terms "include", "contain", or any other variants thereof in this specification are intended to cover a non-exclusive inclusion, such that a process, method, object, or apparatus including a set of elements includes not only those elements, but also other elements that are not expressly listed or elements that are inherent to such processes, methods, objects, or apparatuses. Without more limitations, elements defined by the sentence "including one" does not exclude that there are still other same elements in the processes, methods, objects, or apparatuses including the element. Furthermore, it is to be noted that the scope of the method and apparatus in the implementations of this application is not limited to executing the functions in the order shown or discussed, but may also include executing the functions in a substantially same manner or in the reverse order according to the functions involved, for example, the described method may be executed in an order different from the order described, and various steps may also be added, omitted, or combined. In addition, features described with reference to some examples may also be combined in other examples.

According to the descriptions in the above implementations, those skilled in the art may clearly learn that the method according to the above embodiment may be implemented by relying on software and an essential common hardware platform or, of course, by using hardware, however, in many cases the former is the better implementation. Based on such an understanding, the technical solutions of this application essentially, or the part contributing to the prior art, may be presented in the form of a computer software product. The computer software product is stored in a storage medium (for example, ROM/RAM, a magnetic disk, or an optical disc) including several instructions to enable a terminal (which may be a mobile phone, a computer, a server, an air conditioner, a network device, or the like) to execute the methods described in the various embodiments of this application.

The embodiments of this application have been described above with reference to the accompanying drawings. This application is not limited to the detailed description described above, and the detailed description described above are merely exemplary and not restrictive. Those of ordinary skill in the art may make various variations under the teaching of this application without departing from the spirit of this application and the protection scope of the claims, and such variations all fall within the protection scope of this application.

## Claims

1. A data transmission method, comprising:
receiving, by a primary user equipment (P-UE), configuration information from a network-side device, wherein the P-UE is capable of performing joint data transmission with a secondary UE (S-UE); and
performing, by the P-UE, data splitting or data duplication transmission according to the configuration information.

2. The method according to claim 1, wherein before the performing data splitting or data duplication transmission, the method further comprises at least one of the following:
buffering, by the P-UE, data to be transmitted in a buffer thereof; and
performing, by the P-UE, a buffer status report (BSR) reporting according to a volume of buffered data of the P-UE.

3. The method according to claim 1 or 2, wherein the performing data splitting or data duplication transmission, comprises at least one of the following:
generating, by the P-UE, a first data packet in a manner of a data splitting or duplication according to the size of an uplink grant resource allocated for the P-UE by the network-side device, and transmitting the first data packet;
receiving, by the P-UE, a data request transmitted by the S-UE according to the size of an uplink grant resource thereof, generating a second data packet according to the size of the uplink grant resource and in a manner of a data splitting or duplication, and transmitting the second data packet to the S-UE; and
receiving, by the P-UE, scheduling information of the S-UE, determining the size of the uplink grant resource of the S-UE according to the scheduling information, generating a third data packet according to the size of the uplink grant resource and in a manner of a data splitting or duplication, and transmitting the third data packet to the S-UE; and
transmitting, by the P-UE, a fourth data packet to the S-UE to according a user plane (UP) protocol stack architecture thereof in a manner of a data splitting or duplication.

4. The method according to claim 1, wherein the performing data splitting, comprises:
in a case that there are M-1 data volume thresholds and M Radio Link Control (RLC) entity sets, the M-1 data volume thresholds comprise a first threshold, a second threshold ... an (M-1)^{th} threshold, the M RLC entity sets comprise a first RLC entity set, a second RLC entity set ... an M^{th} RLC entity set, and M is greater than 1, performing, by the P-UE, any of the following:
in a case that a volume of buffered data of the P-UE is lower than the first threshold, performing data transmission at the first RLC entity set;
in a case that a volume of buffered data of the P-UE is higher than or equal to the first threshold and lower than the second threshold, performing data transmission at the first RLC entity set and the second RLC entity set;
in a case that a volume of buffered data of the P-UE is higher than or equal to the second threshold and lower than the third threshold, performing data transmission at the first RLC entity set, the second RLC entity set and the third RLC entity set;
and so on, in a case that a volume of buffered data of the P-UE is higher than the (M-1)^{th} threshold, performing data transmission at the M RLC entity sets.

5. The method according to claim 1, wherein the performing data splitting comprises at least one of the following:
splitting, by the P-UE, data to the S-UE according to data transmission feedback information from the S-UE;
splitting, by the P-UE, data to the S-UE according to the data volume requested by the SUE;
splitting, by the P-UE, data to the S-UE according to link quality fed back by the S-UE;
splitting, by the P-UE, data to the S-UE according to capability information transmitted by the S-UE;
splitting, by the P-UE, data to the S-UE according to negotiation information with the SUE for data splitting; and
splitting, by the P-UE, data to the S-UE according to control information received from the network-side device for data splitting.

6. The method according to claim 1, wherein the performing data splitting, comprises:
in a case that a first link quality threshold of the P-UE or the S-UE is configured, performing, by the P-UE, any of the following:
in a case that a signal measurement value of the P-UE or the S-UE is higher than or equal to the first link quality threshold, performing data transmission at an RLC entity and/or a transmission path of the P-UE;
in a case that a signal measurement value of the P-UE or the S-UE is lower than the first link quality threshold, performing data transmission at an RLC entity and/or a transmission path of the P-UE, and an RLC entity and/or a transmission path of the S-UE, or, performing data transmission at an RLC entity and/or a transmission path of the S-UE;
or,
in a case that a second link quality threshold of the P-UE and a third link quality threshold of the S-UE are configured, performing, by the P-UE, any of the following:
in a case that a first condition is satisfied, or a second condition is not satisfied, performing data transmission at an RLC entity and/or a transmission path of the P-UE; and
in a case that the first condition is not satisfied, or the second condition is satisfied, performing data transmission at an RLC entity and/or a transmission path of the P-UE, and an RLC entity and/or a transmission path of the S-UE, or, performing data transmission at an RLC entity and/or a transmission path of the S-UE;
wherein, the first condition comprises that: a signal measurement value of the P-UE is higher than or equal to the second link quality threshold, and a signal measurement value of the S-UE is lower than the third link quality threshold; and
the second condition comprises that: a signal measurement value of the P-UE is lower than the second link quality threshold, and a signal measurement value of the S-UE is higher than or equal to the third link quality threshold.

7. The method according to claim 1, wherein the performing data splitting or data duplication transmission, comprises any of the following:
in a case that a packet data convergence protocol (PDCP) duplication function is configured for a radio bearer of the P-UE, the PDCP duplication function is activated and the P-UE contains at least two RLC entities associated with a PDCP entity of the radio bearer, using, by the at least two RLC entities of the P-UE, corresponding component carrier (CC) groups thereof to perform transmission of duplicated data; and
in a case that a PDCP duplication function is configured for a radio bearer of the P-UE, the PDCP duplication function is de-activated and the P-UE contains at least two RLC entities associated with a PDCP entity of the radio bearer, using, by a primary RLC entity of the P-UE, all activated CCs of the P-UE to perform transmission of split data.

8. The method according to claim 1, wherein the performing data duplication transmission, comprises any of the following:
in a case that a PDCP duplication function is configured for a radio bearer of the P-UE, the radio bearer comprises L transmission paths, and the PDCP duplication function of the L transmission paths is activated, duplicating, by the P-UE, protocol data units (PDU) of PDCP data to be transmitted to L parts, and transmitting the duplicated L parts of PDUs of PDCP data in the L transmission paths, respectively;
in a case that a PDCP duplication function is configured for a radio bearer of the P-UE, the radio bearer comprises L transmission paths, and the PDCP duplication function of P transmission paths in the L transmission paths is activated, duplicating, by the P-UE, PDUs of PDCP data to be transmitted to P parts, and transmitting the duplicated P parts of PDUs of PDCP data in the P transmission paths, respectively;
wherein, L is greater than 2, and L is greater than P; and the P transmission paths comprise a primary transmission path of the radio bearer.

9. The method according to claim 1, wherein the performing data splitting or data duplication transmission, comprises any of the following:
in a case that an UP protocol stack architecture of the P-UE is a PDCP anchor architecture, performing, by the P-UE, data splitting or data duplication transmission at the data granularity of a PDCP PDU;
in a case that an UP protocol stack architecture of the P-UE is an RLC anchor architecture, performing, by the P-UE, data splitting or data duplication transmission at the data granularity of an RLC PDU; and
in a case that an UP protocol stack architecture of the P-UE is an MAC anchor architecture, performing, by the P-UE, data splitting or data duplication transmission at the data granularity of an MAC PDU.

10. The method according to claim 1, wherein the performing data splitting or data duplication transmission, comprises:
in a case that uplink grant resources of the P-UE and uplink grant resources of the S-UE are in different sizes, performing, by the P-UE, data splitting;
or,
in a case that uplink grant resources of the P-UE and uplink grant resources of the S-UE are in the same size, performing, by the P-UE, data duplication transmission.

11. The method according to claim 1, wherein the method further comprises:
receiving, by the P-UE, indication information from the network-side device, wherein the indication information is used to indicate the P-UE to activate or de-activate the duplication function.

12. The method according to claim 1, wherein the configuration information is used to indicate at least one of the following:
configuring a duplication function for a radio bearer of the P-UE, or, not configuring a duplication function for a radio bearer of the P-UE;
a protocol layer with the duplication function;
a primary RLC entity of the radio bearer of the P-UE;
conditions for data splitting;
a threshold for data splitting;
a threshold for a volume of buffered data of the P-UE;
a split (split) bearer configured by the network-side device for the P-UE;
a split bearer configured by the network-side device for a PDCP entity being located at the P-UE;
the split bearer configured by the network-side device for the PDCP entity being located at the P-UE, the PDCP entity being associated with at least two RLC entities, and each of the RLC entities being located at a different P-UE or S-UE;
a type of the split bearer configured by the network-side device;
a standardized interface being used between the P-UE and the S-UE;
a non-standardized interface being used between the P-UE and the S-UE;
a non-ideal interface being between the P-UE and the S-UE;
an ideal interface being between the P-UE and the S-UE;
a data splitting manner used by the P-UE; and
a data duplication manner used by the P-UE.

13. A data transmission method, comprising:
receiving, by an S-UE, configuration information from a network-side device, wherein the S-UE is capable of performing joint data transmission with a P-UE; and
performing, by the S-UE, data transmission according to the configuration information.

14. The method according to claim 13, wherein the performing data transmission, comprises:
in a case that a PDCP duplication function is configured for a radio bearer of the P-UE, the PDCP duplication function is activated and the S-UE contains at least two RLC entities associated with a PDCP entity of the radio bearer, using, by the at least two RLC entities of the S-UE, corresponding CC groups thereof to perform transmission of duplicated data;
or,
in a case that a PDCP duplication function is configured for a radio bearer of the P-UE, the PDCP duplication function is de-activated and the S-UE contains at least two RLC entities associated with a PDCP entity of the radio bearer, using, by a primary RLC entity of the S-UE, all activated CCs of the S-UE to perform transmission of split data.

15. The method according to claim 13, wherein the configuration information is used to indicate at least one of the following:
configuring a duplication function for a radio bearer of the P-UE, or, not configuring a duplication function for a radio bearer of the P-UE;
a protocol layer with the duplication function;
a primary RLC entity of the radio bearer of the P-UE;
conditions for data splitting;
a threshold for data splitting;
a threshold for a volume of buffered data of the P-UE;
a split bearer configured by the network-side device for the P-UE;
a split bearer configured by the network-side device for a PDCP entity being located at the P-UE;
the split bearer configured by the network-side device for the PDCP entity being located at the P-UE, the PDCP entity being associated with at least two RLC entities, and each of the RLC entities being located at a different P-UE or S-UE;
a type of the split bearer configured by the network-side device;
a standardized interface being used between the P-UE and the S-UE;
a non-standardized interface being used between the P-UE and the S-UE;
a non-ideal interface being between the P-UE and the S-UE;
an ideal interface being between the P-UE and the S-UE;
a data splitting manner used by the P-UE; and
a data duplication manner used by the P-UE.

16. The method according to claim 13, wherein the method further comprises:
receiving, by the S-UE, scheduling information from the network-side device; wherein the scheduling information is used to indicate an uplink grant resource allocated for the S-UE;
transmitting, by the S-UE, a data request to the P-UE according to the size of the uplink grant resource; and
receiving, by the S-UE, a second data packet from the P-UE, wherein the second data packet is generated by the P-UE according to the size of the uplink grant resource.

17. The method according to claim 13, wherein the method further comprises:
S-UE transmitting, by the S-UE, first information to the P-UE;
receiving, by the S-UE, data splitting by the P-UE according to the first information;
wherein the first information comprises at least one of the following:
data transmission feedback information;
the data volume requested;
link quality; and
capacity information.

18. A configuration method, comprising:
transmitting, by a network-side device, configuration information to a P-UE and/or an SUE,
wherein the P-UE is capable of performing joint data transmission with the S-UE; the configuration information is used to indicate at least one of the following:
configuring a duplication function for a radio bearer of the P-UE, or, not configuring a duplication function for a radio bearer of the P-UE;
a protocol layer with the duplication function;
a primary RLC entity of the radio bearer of the P-UE;
conditions for data splitting;
a threshold for data splitting;
a threshold for a volume of buffered data of the P-UE;
a split bearer configured by the network-side device for the P-UE;
a split bearer configured by the network-side device for a PDCP entity being located at the P-UE;
the split bearer configured by the network-side device for the PDCP entity being located at the P-UE, the PDCP entity being associated with at least two RLC entities, and each of the RLC entities being located at a different P-UE or S-UE;
a type of the split bearer configured by the network-side device;
a standardized interface being used between the P-UE and the S-UE;
a non-standardized interface being used between the P-UE and the S-UE;
a non-ideal interface being between the P-UE and the S-UE;
an ideal interface being between the P-UE and the S-UE;
a data splitting manner used by the P-UE; and
a data duplication manner used by the P-UE.

19. The method according to claim 18, wherein the method further comprises:
transmitting, by a network-side device, indication information to the P-UE, the indication information being used to indicate the P-UE to activate or de-activate the duplication function.

20. The method according to claim 18 or 19, wherein the method further comprises any of the following:
allocating, by the network-side device, uplink grant resources for the P-UE and the S-UE according to a BSR of the P-UE;
allocating, by the network-side device, an uplink grant resource for the P-UE according to a BSR of the P-UE, and allocating an uplink grant resource for the S-UE according to a BSR of the S-UE; and
in a case that the duplication function is activated, allocating, by the network-side device, uplink grant resources of the same size for the P-UE and the S-UE.

21. A data transmission apparatus, applied to a P-UE, comprising:
a first receiving module, configured to receive configuration information from a network-side device, wherein the P-UE is capable of performing joint data transmission with an S-UE; and
an executing module, configured to perform data splitting or data duplication transmission according to the configuration information.

22. A data transmission apparatus, comprising:
a third receiving module, configured to receive configuration information from a network-side device, wherein an S-UE is capable of performing joint data transmission with a P-UE; and
a transmission module, configured to perform data transmission according to the configuration information.

23. A configuration apparatus, comprising:
a third transmitting module, configured to transmit configuration information to a P-UE and/or an S-UE,
wherein the P-UE is capable of performing joint data transmission with the S-UE; the configuration information is used to indicate at least one of the following:
configuring a duplication function for a radio bearer of the P-UE, or, not configuring a duplication function for a radio bearer of the P-UE;
a protocol layer with the duplication function;
a primary RLC entity of the radio bearer of the P-UE;
conditions for data splitting;
a threshold for data splitting;
a threshold for a volume of buffered data of the P-UE;
a split bearer configured by the network-side device for the P-UE;
a split bearer configured by the network-side device for a PDCP entity being located at the P-UE;
the split bearer configured by the network-side device for the PDCP entity being located at the P-UE, the PDCP entity being associated with at least two RLC entities, and each of the RLC entities being located at a different P-UE or S-UE;
a type of the split bearer configured by the network-side device;
a standardized interface being used between the P-UE and the S-UE;
a non-standardized interface being used between the P-UE and the S-UE;
a non-ideal interface being between the P-UE and the S-UE;
an ideal interface being between the P-UE and the S-UE;
a data splitting manner used by the P-UE; and
a data duplication manner used by the P-UE.

24. A UE, comprising: a processor and a memory, the memory storing programs or instructions capable of running on the processor, and the program or instruction, when executed by the processor, implementing the steps of the data transmission method according to any one of claims 1 to 12, or the steps of the data transmission method according to any one of claims 13 to 17.

25. A network-side device, comprising: a processor and a memory, the memory storing programs or instructions capable of running on the processor, and the program or instruction, when executed by the processor, implementing the steps of the configuration method according to any one of claims 18 to 20.

26. A readable storage medium, programs or instructions being stored on the readable storage medium, and the program or instruction, when executed by a processor, implementing the steps of the data transmission method according to any one of claims 1 to 12, or the steps of the data transmission method according to any one of claims 13 to 17, or the steps of the configuration method according to any one of claims 18 to 20.

27. A chip, comprising a processor and a communication interface, wherein the communication interface is coupled to the processor, and the processor is configured to run programs or instructions to implement the steps of the data transmission method according to any one of claims 1 to 12, or the steps of the data transmission method according to any one of claims 13 to 17, or the steps of the configuration method according to any one of claims 18 to 20.

28. A computer program product, wherein the program product is stored in a non-volatile storage medium, and the program product is executed by at least one processor to implement the steps of the data transmission method according to any one of claims 1 to 12, or the steps of the data transmission method according to any one of claims 13 to 17, or the steps of the configuration method according to any one of claims 18 to 20.

29. A communication device, configured to execute the steps of the data transmission method according to any one of claims 1 to 12, or the steps of the data transmission method according to any one of claims 13 to 17, or the steps of the configuration method according to any one of claims 18 to 20.
